# EUROPEAN PATENT APPLICATION

(11) **EP 4 252 987 A1**
(43) Date of publication of application: **04.10.2023**
(21) Application number: 21897819.5
(22) Date of filing: 17.11.2021
(51) Int. Cl.: B29B 9/12, B29B 9/14, B29C 45/00, C08K 7/14, C08L 67/04, C08K 3/013

(54) **PELLETS, METHOD FOR PRODUCING PELLETS, AND METHOD FOR PRODUCING INJECTION-MOLDED ARTICLE**

(30) Priority: 24.11.2020 JP 2020194233
(71) Applicant: SUMITOMO CHEMICAL COMPANY, LIMITED, Tokyo 103-6020 (JP)
(72) Inventor: SAKAI, Taiga, Tsukuba-shi, Ibaraki 300-3294 (JP); ENDO, Haruhisa, Tsukuba-shi, Ibaraki 300-3294 (JP)
(74) Representative: Vossius & Partner Patentanwälte Rechtsanwälte mbB
(86) International application number: PCT/JP2021/042226
(87) International publication number: WO 2022/113845

(57) **Abstract**

The present invention relates to pellets containing a liquid crystal polyester resin. The average length (L) of the pellets is 3.2 to 12 mm, the average diameter (D) of the pellets is 3.2 to 6.0 mm, and the value of the average length (L)/average diameter (D) of the pellets is 1 to 2.

## Description

### Technical Field

The present invention relates to pellets, a process for producing the pellets, and a process for producing an injection molded article.

The present application claims priority based on Japanese Patent Application No. 2020-194233 filed in Japan on November 24, 2020, the contents of which are incorporated herein by reference.

### Background Art

A liquid crystal polyester resin is generally referred to as a molten liquid crystal type (thermotropic liquid crystal) polymer. The liquid crystal polyester resin is quite excellent in melt fluidity because of the specific behavior thereof, and has a heat distortion resistance of 300°C or more depending on the structure.

The liquid crystal polyester resin is used for a molded article in an application such as an electronic part, an automobile part, an OA part, or heat resistant tableware by taking advantage of the high fluidity and high heat resistance thereof.

The miniaturization and the thinning of an electronic device have progressed, and the adoption of a liquid crystal polyester resin has been expanding especially in an electronic part such as a connector which has a remarkable tendency of miniaturization and thinning among such devices.

When such a molded article is produced, a pellets of a liquid crystal polyester resin or a liquid crystal polyester resin composition is used as a molding material.

Patent Literature 1 discloses liquid crystalline polymer pellets wherein the pellets length is 1.0 to 5.0 mm, the cut cross section has an elliptical shape, a major diameter thereof is 2.0 to 8.0 mm, and a ratio of the major diameter to a minor diameter (major diameter/minor diameter) is 1.0 to 4.0.

Patent Literature 2 discloses a liquid crystalline resin pellets wherein 1 mm ≤ M ≤ 2.5 mm, 1 mm ≤ T ≤ 2.5 mm, 1 mm ≤ Z ≤ 2.5 mm, and Mσ ≤ 0.15, (M + T + Z) ≤ 7 mm, (M - Z) < 0.5 mm, and (T - M) > -0.1 mm are satisfied, wherein an average length in a direction perpendicular to a cut face of the pellets is set as M, an average length of a longest diameter (major diameter) of the cut face of the pellets is set as T, an average length of a shortest diameter (minor diameter) thereof is set as Z, and a standard deviation of the average length M in the direction perpendicular to the cut face of the pellets is set as (Mσ).

Pellets of a liquid crystal polyester resin composition can be used as a molding material for injection molding.

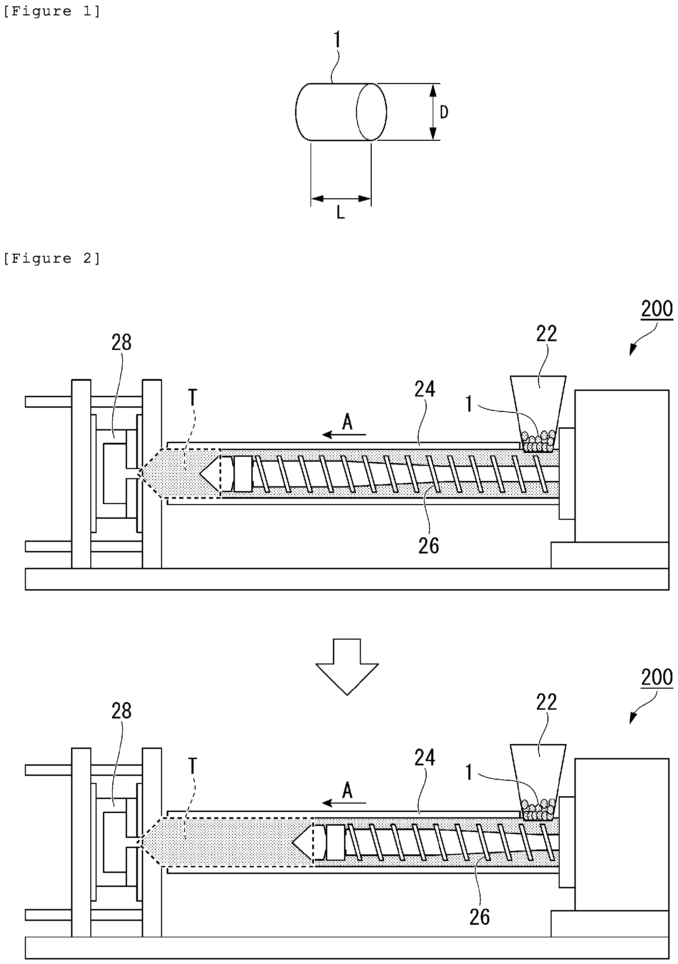

Figure 2 is a schematic view showing an example of an injection molding machine that can melt and mold a pellets of a liquid crystal polyester resin composition. First, pellets 1 are fed into a cylinder 24 from a hopper 22 attached to an injection molding machine 200. A screw 26 is disposed in the cylinder 24, and by the rotation of the screw 26, the pellets 1 fed into the cylinder 24 is extruded in a tip direction A in the cylinder 24. A temperature in the cylinder 24 is set to a temperature higher than the melting temperature of the resin included in the pellets 1, and the pellets 1 are gradually melted while being extruded in the cylinder 24. At the same time, the screw 26 is gradually moved backward (in the direction opposite to the tip direction A of the cylinder), the molten resin and the like are accumulated in a tip portion T of the cylinder, and a constituent component of a predetermined amount of the pellets 1 injected into a mold 28 is plasticized (weighed).

### Citation List

### Patent Literature

Patent Literature 1: Japanese Patent Laid-Open Heisei 8-192421
Patent Literature 2: Japanese Patent Laid-Open Heisei 11-309715

### Summary of Invention

### Problems to be solved by Invention

A liquid crystal polyester resin has been mainly adopted as a raw material for a small electronic part. On the other hand, in recent years, opportunities for a liquid crystal polyester resin to be adopted as a raw material for a larger molded article increase. The amount of a resin melted by an injection molding machine increases as the volume of the finished molded article increases, and the time required for plasticizing the resin (also referred to as plasticization time or metering time) also tends to increase accordingly. When the plasticization time increases, the problem of increased production cost due to a decrease of production efficiency resulting from a decrease in the number of products that can be produced per hour and a problem such as deterioration of the resin due to the heating time of the resin in the cylinder becoming longer tends to occur.

The present invention has been made in order to solve the above problems, and an object thereof is to provide pellets comprising a liquid crystal polyester resin, which is suitable for producing a large injection molded article and has a good plasticization time (metering time) in injection molding, and a process for producing the pellets.

In addition, another object thereof is to provide a process for producing an injection molded article by the pellets as a molding material.

### Means to Solve the Problems

The present inventors have made it clear that the lengthening of the plasticization time is remarkable particularly when a liquid crystal polyester resin pellets are used in a large injection molding machine. It is thought that this is probably because the liquid crystal polyester resin has a lower viscosity in a molten state than a general resin.

Then, in order to solve the above problems, the present inventors have prepared pellets having various shapes comprising a liquid crystal polyester resin to study the relation the plasticization time, and as a result, have found that pellets having a specific shape exhibits an excellent effect in shortening the plasticization time, and have completed the present invention.

That is, the present invention has the following aspects.
<1> Pellets comprising a liquid crystal polyester resin, wherein
   an average length (L) of the pellets is 3.2 to 12 mm, an average diameter (D) of the pellets is 3.2 to 6.0 mm, and
   a value of the average length (L)/the average diameter (D) of the pellets is 1 to 2.
<2> The pellets comprising a liquid crystal polyester resin according to the above <1>, wherein
   a shape of the pellets is a columnar body,
   an average length (L) between end faces of the columnar bodies is 3.2 to 12 mm, an average diameter (D) of the end faces of the columnar bodies is 3.2 to 6.0 mm, and
   a value of the average length (L)/the average diameter (D) is 1 to 2.
<3> The pellets according to the above <1> or <2>, wherein a volume of the pellets is 25 to 350 mm³.
<4> The pellets according to any one of the above <1> to <3>, further comprising an inorganic filler.
<5> The pellets according to the above <4>, wherein a content of the liquid crystal polyester resin is 30% by mass or more and 90% by mass or less, and a content of the inorganic filler is 5% by mass or more and 50% by mass or less, based on a total mass (100% by mass) of the pellets.
<6> The pellets according to the above <4> or <5>, wherein the inorganic filler is at least one selected from the group consisting of a glass fiber, talc, and a mica.
<7> The pellets according to the above <6>, wherein the inorganic filler is a glass fiber.
<8> The pellets according to the above <6> or <7>, wherein a number average fiber length of the glass fiber is 10 to 2000 µm.
<9> The pellets according to any one of the above <1> to <8>, wherein
   the liquid crystal polyester resin comprises
   a repeating unit represented by the following formula (1), a repeating unit represented by the following formula (2), and a repeating unit represented by the following formula (3):

      (1) -O-Ar¹-CO-

      (2) -CO-Ar²-CO-

      (3) -X-Ar³-Y-

      wherein,
      Ar¹ represents a phenylene group, a naphthylene group, or a biphenylylene group,
      Ar² and Ar³ each independently represent a phenylene group, a naphthylene group, a biphenylylene group, or a group represented by the following formula (4), and
      X and Y each independently represent an oxygen atom or an imino group (-NH-); and
      one or more hydrogen atoms in the group represented by Ar¹, Ar², or Ar³ are each independently optionally replaced with a halogen atom, an alkyl group having 1 to 10 carbon atoms, or an aryl group having 6 to 20 carbon atoms,
   (4) -Ar⁴-Z-Ar⁵-

      wherein,
      Ar⁴ and Ar⁵ each independently represent a phenylene group or a naphthylene group, and
      Z represents an oxygen atom, a sulfur atom, a carbonyl group, a sulfonyl group, or an alkylidene group having 1 to 10 carbon atoms; and
      one or more hydrogen atoms in the group represented by Ar⁴ or Ar⁵ are each independently optionally replaced with a halogen atom, an alkyl group having 1 to 10 carbon atoms, or an aryl group having 6 to 20 carbon atoms.
<10> The pellets according to any one of the above <1> to <9>, wherein the pellets are used as a molding material in an injection molding machine of which screw has a diameter of 30 mm or more.
<11> The pellets according to any one of the above <1> to <10>, wherein the pellets are used as a molding material in an injection molding machine which has an injection volume of 100 cm³ or more.
<12> The pellets according to any one of the above <1> to <11>, wherein the pellets are used as a molding material in an injection molding machine, and a value expressed by a pellet volume (mm³) of the pellets/a screw diameter (mm) of the injection molding machine satisfies a relation of 0.5 or more and 20 or less.
<13> The pellets according to any one of the above <1> to <12>, wherein a melt viscosity of the pellets at a temperature of 20°C higher than a flow starting temperature of the liquid crystal polyester is 30 Pa·s or more and 100 Pa·s or less.
<14> A process for producing the pellets according to any one of the above <1> to <13>, comprising melt kneading a raw material comprising the liquid crystal polyester resin to form a strand and then cutting the strand, wherein
   the average diameter (D) of the pellets is an average diameter of cut faces formed by the cutting, and
   the average length (L) of the pellets is an average length between the cut faces.
<15> A process for producing an injection molded article, comprising a step of melting the pellets according to any one of the above <1> to <13> and injection molding the molten pellets by an injection molding machine to obtain an injection molded article.
<16> The process for producing an injection molded article according to the above <15>, wherein the pellets are melted and injection molded by an injection molding machine of which screw has a diameter of 30 mm or more.
<17> The process for producing an injection molded article according to the above <15> or <16>, wherein the pellets are melted and injection molded by an injection molding machine which has an injection volume of 100 cm³ or more.
<18> The process for producing an injection molded article according to any one of the above <15> to <17>, wherein when the pellets are melted and injection molded by an injection molding machine, a value expressed by a pellet volume (mm³) of the pellets/a screw diameter (mm) of the injection molding machine is 0.4 or more.

### Effects of Invention

According to the present invention, it is possible to provide pellets comprising a liquid crystal polyester resin, which is suitable for producing an injection molded article by a large injection molding machine and has a good plasticization time in injection molding of the injection molded article, and a process for producing the pellets.

In addition, according to the present invention, it is possible to provide a process for producing an injection molded article by the pellets as a molding material.

### Brief Description of Drawings

[Figure 1] Figure 1 is a schematic view showing an example of the shape of the pellets of an embodiment.
[Figure 2] Figure 2 is a schematic view showing an example of an injection molding machine that can melt mold the pellets of the embodiment.
[Figure 3] Figure 3 is a schematic view showing an example of a production apparatus used in a process for producing the pellets of the embodiment.
[Figure 4A] Figure 4A is a schematic view showing an example of the state of the pellets in the cylinder of an injection molding machine.
[Figure 4B] Figure 4B is a schematic view showing an example of the state of the pellets in the cylinder of an injection molding machine.

### Description of Embodiments

Hereinafter, embodiments of the pellets, the process for producing the pellets, and the process for producing an injection molded article according to the present invention will be described.

### «Pellets»

The pellets of the embodiment are pellets comprising a liquid crystal polyester resin and the average length (L) of the pellets is 3.2 to 12 mm, the average diameter (D) of the pellets is 3.2 to 6.0 mm, and the value of the average length (L)/the average diameter (D) of the pellets is 1 to 2.

Examples of the shape of the pellets of the embodiment include a columnar body. The shapes of both end faces (first end face and second end face) of the columnar body are not particularly limited, examples of the shapes include a polygonal columnar shape wherein the end face shape is polygonal and a circular columnar shape wherein the end face shape is circular, and a circular columnar shape is preferable. The circular columnar shape also includes one wherein the end face shape is an elliptical shape and one wherein the end face shape is an approximately circular shape. The end faces of the columnar bodies are not necessarily parallel to each other.

The average diameter (D) of the pellets that have columnar bodies is measured for the end face shape of the columnar bodies.

As another aspect, the pellets of the embodiment are pellets comprising a liquid crystal polyester resin, wherein the shape of the pellets may be a columnar body, the average length (L) between end faces of the columnar body may be 3.2 to 12 mm, the average diameter (D) of the end faces of the columnar body may be 3.2 to 6.0 mm, and the value of the average length (L)/the average diameter (D) may be 1 to 2.

The pellets of the embodiment can be obtained, for example, by cutting with pulling out a strand prepared by extruding a liquid crystal polyester resin and pelletizing the strand as described later. Like this, the strand is pelletized while an external force is applied to the strand, and thus the cut faces of the pellets of the present embodiment may be the first end face and the second end face, and the shapes of these end faces can be elliptical or approximately circular.

In this description, the elliptical shape includes not only the shape of a curve defined as a locus of points at which the sum of distances from two fixed points is constant, but also the shape of an approximate ellipse similar to the curve defined above.

In the pellets of the present embodiment, the average length (L) of the pellets and the average diameter (D) of the pellets can be determined as follows.

Figure 1 is a schematic view showing an example of the pellets of the embodiment. Here, pellets 1 that have columnar bodies in a circular columnar shape is given as an example.

An end face of the columnar body of the pellets 1 corresponds to a cut face of the pellets in the pelletization. The diameter (D) is defined as the length of a short side of a rectangle circumscribing this cut face (end face). The circumscribing rectangle is set such that the area of the rectangle may be minimized. When the cut face is not flat, the cut face is specified by a two-dimensional image obtained by photographing the cut face from the direction in which the area is maximized.

The axial direction in which both end faces of the pellets that have a columnar bodies are connected at the shortest distance corresponds to the discharge direction of the liquid crystal polyester resin in the preparation of the strand above described. The length (L) is defined as the shortest length in the axial direction in a projection image of the pellets obtained from a direction perpendicular to the axial direction.

The measurement was carried out on at least 20 randomly selected pellets, and the arithmetic average value on a number basis of the diameters (D) of the pellets is defined as the average diameter (D) of the pellets, and the arithmetic average value on a number basis of the lengths (L) of the pellets is defined as the average length (L) of the pellets. If the shapes of both end faces (first end face and second end face) are different from each other, both are included in the measurement.

As another aspect, the pellets of the embodiment are pellets comprising a liquid crystal polyester resin, wherein the average length (L) of the pellets may be 3.2 to 12 mm, the average diameter (D) of a cut face of the pellets may be 3.2 to 6.0 mm, and the value of the average length (L)/the average diameter (D) of the pellets may be 1 to 2.

As another aspect, the pellets of the embodiment are pellets comprising a liquid crystal polyester resin, wherein the average length (L) of the pellets may be 3.2 to 12 mm, the shape of a cut face of the pellets may be circular or elliptical, the average diameter (D) of the cut face may be 3.2 to 6.0 mm, and the value of the average length (L)/the average diameter (D) of the pellets may be 1 to 2.

The pellets 1 that have a circular columnar body in a columnar shape has been given as an example here, but even when the shape of a cut face (end face) is not circular or elliptical, the average diameter (D) of the pellets can be determined as the length of a short side of a rectangle circumscribing the cut face (end face).

The lower limit value of the average length (L) of the pellets of the embodiment is 3.2 mm or more, and may be more than 3.2 mm, may be 4 mm or more, may be more than 4 mm, or may be 5 mm or more.

The upper limit value of the average length (L) of the pellets of the embodiment is 12 mm or less, and may be 11.5 mm or less, may be 11 mm or less, may be 10.5 mm or less, or may be less than 10.5 mm.

The above upper limit values and lower limit values of the average length (L) of the pellets may be freely combined.

The average length (L) of the pellets of the embodiment is 3.2 mm or more and 12 mm or less, preferably more than 3.2 mm and 11.5 mm or less, more preferably 4 mm or more and 11 mm or less, further preferably more than 4 mm and 10.5 mm or less, and particularly preferably 5 mm or more and less than 10.5 mm.

When the average length (L) of the pellets of the embodiment is within such a range, the plasticization time of injection molding using a large injection molding machine that can produce a large injection molded article can be good.

In particular, the average length (L) of the pellets of the embodiment is preferably 10.5 mm or less because it is possible to suppress a variation in the plasticization time of injection molding.

As another aspect, the average length (L) of the pellets of the embodiment is 3.2 mm or more and 12 mm or less, preferably more than 3.2 mm and 11 mm or less, more preferably 5 mm or more and 10 mm or less, further preferably more than 5 mm and 10.5 mm or less, and particularly preferably 6 mm or more and 9 mm or less.

When the average length (L) of the pellets of the embodiment is within such a range, the plasticization time of injection molding using a large injection molding machine that can produce a large injection molded article can be good.

In this description, the "plasticization time" in injection molding refers to the time from the time point when the screw rotation (weighing) is started with the preceding injection completed and the screw moved forward to the tip direction of the cylinder, to the time point when a desired amount of a molding material, including a molten resin, corresponding to the volume of the injection molded article is accumulated at the tip portion of the cylinder. The plasticization time can be measured by a measuring instrument attached to an injection molding machine. It can be deemed that the shorter the plasticization time, the better the plasticization time.

The lower limit value of the average diameter (D) of the pellets of the embodiment is 3.2 mm or more, and may be 3.3 mm or more, or may be 3.5 mm or more.

The upper limit value of the average diameter (D) of the pellets of the embodiment is 6.0 mm or less, and may be 6.0 mm or less, or may be 5.9 mm or less.

The above upper limit values and lower limit values of the average diameter (D) of the pellets may be freely combined.

The average diameter (D) of the pellets of the embodiment is 3.2 mm or more and 6.0 mm or less, preferably 3.3 mm or more and 6.0 mm or less, and more preferably 3.5 mm or more and 5.9 mm or less.

When the average diameter (D) of the pellets of the embodiment is within such a range, the plasticization time in injection molding using a large injection molding machine can be good.

The lower limit value of the average length (L)/the average diameter (D) of the pellets of the embodiment is 1 or more, may be 1.2 or more, or may be 1.3 or more.

The upper limit value of the average length (L)/the average diameter (D) of the pellets of the embodiment is 2 or less, and preferably 1.8 or less.

The above upper limit values and lower limit values of the average length (L)/the average diameter (D) of the pellets may be freely combined.

The value of the average length (L)/the average diameter (D) of the pellets of the embodiment is 1 or more and 2 or less, preferably 1.2 or more and 2.0 or less, and more preferably 1.3 or more and 1.8 or less.

When the average length (L)/the average diameter (D) of the pellets of the embodiment is within such a range, the plasticization time of injection molding using a large injection molding machine can be good.

The pellets of the embodiment have a volume of preferably 25 to 350 mm³, more preferably 30 to 300 mm³, and further preferably 60 to 250 mm³.

When the volume of the pellets of the embodiment is within such a range, the plasticization time of injection molding using a large injection molding machine can be good.

As another aspect, the pellets of the embodiment have a volume of preferably 25 to 350 mm³, more preferably 50 to 300 mm³, and further preferably 90 to 240 mm³.

In a cut face of the pellets of the embodiment, the diameter (D) is the length of a short side of a rectangle circumscribing this cut face, that is, the "minor diameter."

In the cut face of the pellets of the embodiment, the ratio (major diameter/minor diameter) of the length of a long side of a rectangle circumscribing the cut face (that is, the "major diameter") to the minor diameter is usually 1 to 1.3, preferably 1 to 1.2, and more preferably 1 to 1.1.

The pellets of the embodiment have an average length (L) of 3.2 mm or more and 12 mm or less, an average diameter (D) of 3.2 mm or more and 6.0 mm or less, and a value of the average length (L)/the average diameter (D) of 1 to 2.

In the pellets of the embodiment, the preferable values of the average length (L), the average diameter (D), the average length (L)/the average diameter (D), and the volume given above as examples can be freely combined.

As an example, the pellets of the embodiment may have an average length (L) of 3.2 mm or more and 12 mm or less, an average diameter (D) of 3.2 mm or more and 6.0 mm or less, a value of the average length (L)/the average diameter (D) of 1 to 2, and a volume of 25 to 350 mm³.

As an example, the pellets of the embodiment may have an average length (L) of 4 mm or more and 11 mm or less, an average diameter (D) of 3.3 mm or more and 6.0 mm or less, a value of the average length (L)/the average diameter (D) of 1.2 or more and 2.0 or less, and a volume of 30 to 300 mm³.

As an example, the pellets of the embodiment may have an average length (L) of 5 mm or more and less than 10.5 mm, an average diameter (D) of 3.5 mm or more and 5.9 mm or less, a value of the average length (L)/the average diameter (D) of 1.3 or more and 1.6 or less, and a volume of 60 to 250 mm³.

As another aspect, the pellets of the embodiment may have an average length (L) of 5 mm or more and 10 mm or less, an average diameter (D) of 3.3 mm or more and 6.0 mm or less, a value of the average length (L)/the average diameter (D) of 1.2 or more and 2.0 or less, and a volume of 50 to 300 mm³.

As another aspect, the pellets of the embodiment may have an average length (L) of 6 mm or more and 9 mm or less, an average diameter (D) of 3.5 mm or more and 5.5 mm or less, a value of the average length (L)/the average diameter (D) of 1.3 or more and 1.6 or less, and a volume of 90 to 240 mm³.

### <Liquid crystal polyester resin>

Hereinafter, an embodiment of the liquid crystal polyester used in the present embodiment will be described.

The liquid crystal polyester according to the present embodiment is a polyester that exhibits a liquid crystal in a molten state, and is preferably melted at a temperature of 450°C or less. The liquid crystal polyester may be a liquid crystal polyester amide, a liquid crystal polyester ether, a liquid crystal polyester carbonate, or a liquid crystal polyester imide. The liquid crystal polyester is preferably a wholly aromatic liquid crystal polyester having only a structural unit derived from an aromatic compound as a raw material monomer.

Typical examples of the liquid crystal polyester resin used in the present embodiment include a polymer obtained by condensation polymerization (polycondensation) of at least one compound selected from the group consisting of an aromatic diol, an aromatic hydroxyamine, and an aromatic diamine, an aromatic hydroxycarboxylic acid, and an aromatic dicarboxylic acid; a polymer obtained by polymerization of a plurality of aromatic hydroxycarboxylic acids; a polymer obtained by polymerization of at least one compound selected from the group consisting of an aromatic diol, an aromatic hydroxyamine, and an aromatic diamine, and an aromatic dicarboxylic acid; and a polymer obtained by polymerization of a polyester such as polyethylene terephthalate and an aromatic hydroxycarboxylic acid.

Among these, a polymer obtained by condensation polymerization (polycondensation) of at least one compound selected from the group consisting of an aromatic diol, an aromatic hydroxyamine, and an aromatic diamine, an aromatic hydroxycarboxylic acid, and an aromatic dicarboxylic acid is preferable as the liquid crystal polyester resin used in the present embodiment.

Here, the aromatic hydroxycarboxylic acid, the aromatic dicarboxylic acid, the aromatic diol, the aromatic hydroxyamine, and the aromatic diamine may each independently be partially or wholly replaced with a polymerizable ester-forming derivative thereof.

Examples of a polymerizable derivative of a compound having a carboxy group such as an aromatic hydroxycarboxylic acid or an aromatic dicarboxylic acid include an ester, an acid halide, and an acid anhydride. Examples of the above ester include a compound obtained by converting the carboxy group into an alkoxycarbonyl group or an aryloxycarbonyl group. Examples of the above acid halide include a compound obtained by converting the carboxy group into a haloformyl group. Examples of the above acid anhydride include a compound obtained by converting the carboxy group into an acyloxycarbonyl group.

Examples of a polymerizable derivative of a compound having a hydroxy group such as an aromatic hydroxycarboxylic acid, an aromatic diol, or an aromatic hydroxyamine include a compound (acylated product) obtained by converting the hydroxy group by acylation into an acyloxy group.

Examples of a polymerizable derivative of a compound having an amino group such as an aromatic hydroxyamine or an aromatic diamine include a compound (acylated product) obtained by converting an amino group by acylation into an acylamino group.

Among the examples of the polymerizable derivatives given as examples, acylated products obtained by acylating an aromatic hydroxycarboxylic acid and an aromatic diol, respectively, are preferable as a raw material monomer of the liquid crystal polyester resin.

The liquid crystal polyester resin used in the present embodiment preferably has a repeating unit represented by the following formula (1) (hereinafter, sometimes referred to as a "repeating unit (1)"). In addition, the liquid crystal polyester resin more preferably has a repeating unit (1), a repeating unit represented by the following formula (2) (hereinafter, sometimes referred to as a "repeating unit (2)"), and a repeating unit represented by the following formula (3) (hereinafter, sometimes referred to as a "repeating unit (3)").

(1) -O-Ar¹-CO-

(2) -CO-Ar²-CO-

(3) -X-Ar³-Y-

wherein in formulas (1) to (3),
Ar¹ represents a phenylene group, a naphthylene group, or a biphenylylene group;
Ar² and Ar³ each independently represent a phenylene group, a naphthylene group, a biphenylylene group, or a group represented by the following formula (4); X and Y each independently represent an oxygen atom or an imino group (-NH-); and
one or more hydrogen atoms in the group represented by Ar¹, Ar², or Ar³ are each independently optionally replaced with a halogen atom, an alkyl group having 1 to 10 carbon atoms, or an aryl group having 6 to 20 carbon atoms.

   (4) -Ar⁴-Z-Ar⁵-

   wherein in formula (4),
   Ar⁴ and Ar⁵ each independently represent a phenylene group or a naphthylene group; Z represents an oxygen atom, a sulfur atom, a carbonyl group, a sulfonyl group, or an alkylidene group having 1 to 10 carbon atoms; and
   one or more hydrogen atoms in the group represented by Ar⁴ or Ar⁵ are each independently optionally replaced with a halogen atom, an alkyl group having 1 to 10 carbon atoms, or an aryl group having 6 to 20 carbon atoms.

Examples of the halogen atom with which a hydrogen atom can be replaced include a fluorine atom, a chlorine atom, a bromine atom, and an iodine atom.

Examples of the alkyl group having 1 to 10 carbon atoms with which a hydrogen atom can be replaced include a methyl group, an ethyl group, a 1-propyl group, an isopropyl group, a 1-butyl group, an isobutyl group, a sec-butyl group, a tert-butyl group, a 1-hexyl group, a 2-ethylhexyl group, a 1-octyl group, and a 1-decyl group.

Examples of the aryl group having 6 to 20 carbon atoms with which a hydrogen atom can be replaced include a monocyclic aromatic group such as a phenyl group, an orthotolyl group, a metatolyl group, or a paratolyl group, and a fused aromatic group such as a 1-naphthyl group or a 2-naphthyl group.

When one or more hydrogen atoms in the group represented by Ar¹, Ar², Ar³, Ar⁴, or Ar⁵ are replaced with any of the above substituents, the number of the substituents that replace the hydrogen atoms is preferably one or two independently for each group represented by Ar¹, Ar², Ar³, Ar⁴, or Ar⁵. In addition, the number of the substituents is more preferably 1 for each group represented by Ar¹, Ar², Ar³, Ar⁴, or Ar⁵.

Examples of the alkylidene group having 1 to 10 carbon atoms include a methylene group, an ethylidene group, an isopropylidene group, a 1-butylidene group, and a 2-ethylhexylidene group.

The repeating unit (1) is a repeating unit derived from an aromatic hydroxycarboxylic acid.

In this description, "derived from" means that the chemical structure change for polymerization of a raw material monomer and no other structural changes occur.

Examples of the aromatic hydroxycarboxylic acid include 4-hydroxybenzoic acid, metahydroxybenzoic acid, 2-hydroxy-6-naphthoic acid, 2-hydroxy-3-naphthoic acid, 1-hydroxy-5-naphthoic acid, 4-hydroxy-4'-carboxydiphenyl ether, and an aromatic hydroxycarboxylic acid obtained by replacing a part of the hydrogen atoms in an aromatic ring of any of these aromatic hydroxycarboxylic acids with a substituent selected from the group consisting of an alkyl group, an aryl group, and a halogen atom.

The aromatic hydroxycarboxylic acids may be used singly or in combinations of two or more in the production of the liquid crystal polyester resin.

As the repeating unit (1), a unit in which Ar¹ is a 1,4-phenylene group (for example, a repeating unit derived from 4-hydroxybenzoic acid) and a unit in which Ar¹ is a 2,6-naphthylene group (for example, a repeating unit derived from 6-hydroxy-2-naphthoic acid) are preferable, and a unit in which Ar¹ is a 1,4-phenylene group is more preferable.

The repeating unit (2) is a repeating unit derived from an aromatic dicarboxylic acid.

Examples of the aromatic dicarboxylic acid include terephthalic acid, isophthalic acid, biphenyl-4,4'-dicarboxylic acid, 2,6-naphthalenedicarboxylic acid, diphenyl ether-4,4'-dicarboxylic acid, diphenyl thioether-4,4'-dicarboxylic acid, and an aromatic dicarboxylic acid obtained by replacing a part of the hydrogen atoms in an aromatic ring of any of these aromatic dicarboxylic acids with a substituent selected from the group consisting of an alkyl group, an aryl group, and a halogen atom.

The aromatic dicarboxylic acids may be used singly or in combinations of two or more in the production of the liquid crystal polyester resin.

As the repeating unit (2), a unit in which Ar² is a 1,4-phenylene group (for example, a repeating unit derived from terephthalic acid), a unit in which Ar² is a 1,3-phenylene group (for example, a repeating unit derived from isophthalic acid), a unit in which Ar² is a 2,6-naphthylene group (for example, a repeating unit derived from 2,6-naphthalenedicarboxylic acid), and a unit in which Ar² is a diphenyl ether-4,4'-diyl group (for example, a repeating unit derived from a diphenyl ether-4,4'-dicarboxylic acid) are preferable, and a unit in which Ar² is a 1,4-phenylene group and a unit in which Ar² is a 1,3-phenylene group are more preferable.

The repeating unit (3) is a repeating unit derived from an aromatic diol, an aromatic hydroxyamine or an aromatic diamine.

Examples of the aromatic diol, the aromatic hydroxyamine, or the aromatic diamine include 4,4'-dihydroxybiphenyl, hydroquinone, resorcin, 4,4'-dihydroxydiphenyl ketone, 4,4'-dihydroxydiphenyl ether, bis(4-hydroxyphenyl)methane, 1,2-bis(4-hydroxyphenyl)ethane, 4,4'-dihydroxydiphenylsulfone, 4,4'-dihydroxydiphenyl thioether, 2,6-dihydroxynaphthalene, 1,5-dihydroxynaphthalene, 4-aminophenol, 1,4-phenylenediamine, 4-amino-4'-hydroxybiphenyl, and 4,4'-diaminobiphenyl.

The aromatic diols, the aromatic hydroxyamines, or the aromatic diamines may be used singly or in combinations of two or more in the production of the liquid crystal polyester resin.

As the repeating unit (3), a unit in which Ar³ is a 1,4-phenylene group (for example, a repeating unit derived from hydroquinone, 4-aminophenol, or 1,4-phenylenediamine) and a unit in which Ar³ is a 4,4'-biphenylylene group (for example, a repeating unit derived from 4,4'-dihydroxybiphenyl, 4-amino-4'-hydroxybiphenyl, or 4,4'-diaminobiphenyl) are preferable, and a unit in which Ar³ is a 4,4'-biphenylylene group is more preferable.

As the repeating unit (3), a unit in which X and Y are each an oxygen atom is preferable.

The liquid crystal polyester having the above repeating units (1) to (3) more preferably has a repeating unit represented by the following formula (1), a repeating unit represented by the following formula (2), and a repeating unit represented by the following formula (3) .

(1) -O-Ar¹-CO-

(2) -CO-Ar²-CO-

(3) -O-Ar³-O-

wherein Ar¹ represents a 2,6-naphthylene group, a 1,4-phenylene group, or a 4,4'-biphenylylene group;
Ar² and Ar³ each independently represent a 2,6-naphthylene group, a 2,7-naphthylene group, a 1,4-phenylene group, a 1,3-phenylene group, or a 4,4'-biphenylylene group; and
hydrogen atoms in the group represented by Ar¹, Ar², or Ar³ are each independently optionally replaced with a halogen atom, an alkyl group having 1 to 10 carbon atoms, or an aryl group having 6 to 20 carbon atoms.

When a molded article obtained by the pellets of the present embodiment as a molding material is required to have particularly good heat resistance and thermal stability, the number of substituents of the repeating units (1) to (3) is preferably small. In addition, when a molded article obtained by the pellets of the present embodiment as a molding material is required to have particularly good heat resistance and thermal stability, a heat-labile substituent (for example, an alkyl group) is preferably not contained.

In the present embodiment, the heat resistance of the molded article refers to a property in which a resin, which is a molding material of the molded article, does not easily soften in a high temperature environment. In the present embodiment, the heat resistance of the molded article can be clarified by measuring the deflection temperature of the resin under load. The deflection temperature under load in the present embodiment is measured under a load of 1.82 MPa according to ASTM D648. It can be deemed that the higher the resin's deflection temperature under load thus measured, the higher the heat resistance of the molded article.

In addition, in the present embodiment, the thermal stability of the molded article refers to a property in which degrading or deteriorating of the resin does not occur easily when the molded article is held at the temperature at which the resin is molded and processed (melting temperature).

Next, a combination of the structural units of the liquid crystal polyester resin particularly suitable for application to the present embodiment will be described in detail based on the above examples of the structural units.

Specific examples of the preferable liquid crystal polyester resin used in the present embodiment include a resin consisting of any of structural units (repeating units) derived from the following monomers.
(a) 4-Hydroxybenzoic acid/2-hydroxy-6-naphthoic acid copolymer
(b) 4-Hydroxybenzoic acid/terephthalic acid/4,4'-dihydroxybiphenyl copolymer
(c) 4-Hydroxybenzoic acid/terephthalic acid/isophthalic acid/4,4'-dihydroxybiphenyl copolymer
(d) 4-Hydroxybenzoic acid/terephthalic acid/isophthalic acid/4,4'-dihydroxybiphenyl/hydroquinone copolymer
(e) 4-Hydroxybenzoic acid/terephthalic acid/hydroquinone copolymer
(f) 2-Hydroxy-6-naphthoic acid/terephthalic acid/hydroquinone copolymer
(g) 4-Hydroxybenzoic acid/2-hydroxy-6-naphthoic acid/terephthalic acid/4,4'-dihydroxybiphenyl copolymer
(h) 2-Hydroxy-6-naphthoic acid/terephthalic acid/4,4'-dihydroxybiphenyl copolymer
(i) 4-Hydroxybenzoic acid/2-hydroxy-6-naphthoic acid/terephthalic acid/hydroquinone copolymer
(j) 4-Hydroxybenzoic acid/2-hydroxy-6-naphthoic acid/terephthalic acid/hydroquinone/4,4'-dihydroxybiphenyl copolymer
(k) 4-Hydroxybenzoic acid/2,6-naphthalenedicarboxylic acid/4,4'-dihydroxybiphenyl copolymer
(l) 4-Hydroxybenzoic acid/terephthalic acid/2,6-naphthalenedicarboxylic acid/hydroquinone copolymer
(m) 4-Hydroxybenzoic acid/2,6-naphthalenedicarboxylic acid/hydroquinone copolymer
(n) 4-Hydroxybenzoic acid/2-hydroxy-6-naphthoic acid/2,6-naphthalenedicarboxylic acid/hydroquinone copolymer
(o) 4-Hydroxybenzoic acid/terephthalic acid/2,6-naphthalenedicarboxylic acid/hydroquinone/4,4'-dihydroxybiphenyl copolymer
(p) 4-Hydroxybenzoic acid/terephthalic acid/4-aminophenol copolymer
(q) 2-Hydroxy-6-naphthoic acid/terephthalic acid/4-aminophenol copolymer
(r) 4-Hydroxybenzoic acid/2-hydroxy-6-naphthoic acid/terephthalic acid/4-aminophenol copolymer
(s) 4-Hydroxybenzoic acid/terephthalic acid/4,4'-dihydroxybiphenyl/4-aminophenol copolymer
(t) 4-Hydroxybenzoic acid/terephthalic acid/ethylene glycol copolymer
(u) 4-Hydroxybenzoic acid/terephthalic acid/4,4'-dihydroxybiphenyl/ethylene glycol copolymer
(v) 4-Hydroxybenzoic acid/2-hydroxy-6-naphthoic acid/terephthalic acid/ethylene glycol copolymer
(w) 4-Hydroxybenzoic acid/2-hydroxy-6-naphthoic acid/terephthalic acid/4,4'-dihydroxybiphenyl/ethylene glycol copolymer
(x) 4-Hydroxybenzoic acid/terephthalic acid/2,6-naphthalenedicarboxylic acid/4,4'-dihydroxybiphenyl copolymer

Among the above examples, (b) and (c) are preferable, and (c) is more preferable. That is, more preferably, the Ar¹ is a 1,4-phenylene group, the Ar² is a 1,4-phenylene group and 1,3-phenylene group, the Ar³ is a biphenylylene group, and the X and the Y are each an oxygen atom.

The content rate of the repeating unit (1) of the liquid crystal polyester resin is preferably 30 mol% or more, more preferably 30 mol% or more and 80 mol% or less, further preferably 30 mol% or more and 70 mol% or less, and especially preferably 35 mol% or more and 65 mol% or less based on the total amount of all the repeating units constituting the liquid crystal polyester resin. The total amount of all the repeating units constituting the liquid crystal polyester resin is the value of the sum of the amount of substance equivalent (mol) of each repeating unit constituting the liquid crystal polyester resin determined by dividing the mass of the repeating unit by the formula weight of the repeating unit.

When the content rate of the repeating unit (1) of the liquid crystal polyester resin is 30 mol% or more, the heat resistance and the hardness of the molded article obtained by the pellets of the present embodiment as a molding material are easily improved. In addition, when the content rate of the repeating unit (1) is 80 mol% or less, the melt viscosity can be lowered. Because of this, the temperature required for molding the liquid crystal polyester resin tends to be low.

The content rate of the repeating unit (2) of the liquid crystal polyester resin is preferably 35 mol% or less, more preferably 10 mol% or more and 35 mol% or less, further preferably 15 mol% or more and 35 mol% or less, and especially preferably 17.5 mol% or more and 32.5 mol% or less based on the total amount of all the repeating units constituting the liquid crystal polyester resin.

The content rate of the repeating unit (3) of the liquid crystal polyester resin is preferably 35 mol% or less, more preferably 10 mol% or more and 35 mol% or less, further preferably 15 mol% or more and 35 mol% or less, and especially preferably 17.5 mol% or more and 32.5 mol% or less based on the total amount of all the repeating units constituting the liquid crystal polyester resin.

In the liquid crystal polyester resin, the ratio of the content rate of the repeating unit (2) to the content rate of the repeating unit (3) is expressed as [content rate of repeating unit (2)]/[content rate of repeating unit (3)] (mol/mol), and is preferably 0.9 or more and 1.1 or less, more preferably 0.95 or more and 1.05 or less, and further preferably 0.98 or more and 1.02 or less.

In the liquid crystal polyester resin, the ratio of the content rate of the repeating unit (3) to the content rate of the repeating unit (1) is expressed as [content rate of repeating unit (3)]/[content rate of repeating unit (1)] (mol/mol), and is preferably 0.2 or more and 1.0 or less, more preferably 0.25 or more and 0.85 or less, and further preferably 0.3 or more and 0.75 or less.

In the liquid crystal polyester resin, the mole ratio y/x of the repeating unit (2) is preferably more than 0 and 1 or less, more preferably 0.1 or more and 0.9 or less, and further preferably 0.2 or more and 0.8 or less.
x represents the mole content of a repeating unit in which Ar² is a 1,4-phenylene group.
y represents the mole content of a repeating unit in which Ar² is a 1,3-phenylene group.

The sum of the content rate of the repeating unit (1) of the liquid crystal polyester resin, the content rate of the repeating unit (2) of the liquid crystal polyester, and the content rate of the repeating unit (3) of the liquid crystal polyester does not exceed 100 mol%.

As another aspect, the content rate on a number basis of the repeating unit (1) of the liquid crystal polyester resin is preferably 30% or more, more preferably 30% or more and 80% or less, further preferably 30% or more and 70% or less, and especially preferably 35% or more and 65% or less based on the total number (100%) of all the repeating units constituting the liquid crystal polyester resin.

As another aspect, the content rate on a number basis of the repeating unit (2) of the liquid crystal polyester resin is preferably 35% or less, more preferably 10% or more and 35% or less, further preferably 15% or more and 35% or less, and especially preferably 17.5% or more and 32.5% or less based on the total number (100%) of all the repeating units constituting the liquid crystal polyester resin.

As another aspect, the content rate on a number basis of the repeating unit (3) of the liquid crystal polyester resin is preferably 35% or less, more preferably 10% or more and 35% or less, further preferably 15% or more and 35% or less, and especially preferably 17.5% or more and 32.5% or less based on the total number (100%) of all the repeating units constituting the liquid crystal polyester resin.

In the liquid crystal polyester resin, the ratio of the content rate of the repeating unit (2) to the content rate of the repeating unit (3) is expressed as [content rate of repeating unit (2)]/[content rate of repeating unit (3)] (number/number), and is preferably 0.9 or more and 1.1 or less, more preferably 0.95 or more and 1.05 or less, and further preferably 0.98 or more and 1.02 or less.

In the liquid crystal polyester resin, the ratio of the content rate of the repeating unit (3) to the content rate of the repeating unit (1) is expressed as [content rate of repeating unit (3)]/[content rate of repeating unit (1)] (number/number), and is preferably 0.2 or more and 1.0 or less, more preferably 0.25 or more and 0.85 or less, and further preferably 0.3 or more and 0.75 or less.

In the liquid crystal polyester resin, the ratio on a number basis y/x of the repeating unit (2) is preferably more than 0 and 1 or less, more preferably 0.1 or more and 0.9 or less, and further preferably 0.2 or more and 0.8 or less.
x represents the number of repeating units in which Ar² is a 1,4-phenylene group that are contained.
y represents the number of repeating units in which Ar² is a 1,3-phenylene group that are contained.

The sum of the content rate of the repeating unit (1) of the liquid crystal polyester resin, the content rate of the repeating unit (2) of the liquid crystal polyester, and the content rate of the repeating unit (3) of the liquid crystal polyester does not exceed 100% on a number basis.

In this description, the number of each repeating unit (degree of polymerization of each repeating unit) means a value determined by the analysis method disclosed in Japanese Patent Laid-Open No. 2000-19168.

Specifically, the number of each repeating unit can be calculated by reacting a liquid crystal polyester resin with a lower alcohol (alcohol having 1 to 3 carbon atoms) in a supercritical state to depolymerize the liquid crystal polyester resin to a monomer inducing a repeating unit thereof, and quantifying the monomer inducing each repeating unit obtained as a depolymerization product by liquid chromatography.

For example, when the liquid crystal polyester resin consists of the repeating units (1) to (3), the number of the repeating unit (1) can be determined by calculating the molar concentrations of monomers inducing the repeating units (1) to (3), respectively, by liquid chromatography, and calculating the ratio of the molar concentration of the monomer inducing the repeating unit (1) when the sum of the molar concentrations of the monomers inducing the repeating units (1) to (3), respectively, is 100%.

The liquid crystal polyester resin may have only one kind or two or more kinds of the repeating units (1) to (3) independently each other. In addition, the liquid crystal polyester resin may have one or more repeating units other than the repeating units (1) to (3), and the content rate thereof is preferably 10 mol% or less, and more preferably 5 mol% or less based on the total amount of all the repeating units.

### [Liquid crystal polyester resin mixture]

In the present embodiment, it is also possible to use a liquid crystal polyester resin mixture obtained by mixing a plurality of liquid crystal polyester resins.

Here, as the liquid crystal polyester resin mixture, a mixture of liquid crystal polyester resins different from each other in flow starting temperature is envisioned. In the liquid crystal polyester resin mixture, the liquid crystal polyester resin having the highest flow starting temperature is defined as a first liquid crystal polyester resin, and the liquid crystal polyester resin having the lowest flow starting temperature is defined as a second liquid crystal polyester resin.

In addition, in the liquid crystal polyester resin mixture, the content of the second liquid crystal polyester resin is preferably 10 to 150 parts by mass, more preferably 30 to 120 parts by mass, and further preferably 50 to 100 parts by mass per 100 parts by mass of the first liquid crystal polyester resin.

### [Process for producing liquid crystal polyester resin]

Next, an example of the process for producing the liquid crystal polyester resin according to the present embodiment will be described.

The liquid crystal polyester resin of the present embodiment is preferably produced by the following acylation step and polymerization step.

The acylation step is a step of acylating a phenolic hydroxy group of a raw material monomer with a fatty acid anhydride (for example, acetic anhydride) to obtain an acylated product.

In the polymerization step, the liquid crystal polyester resin may be obtained by polymerizing an acyl group of the acylated product obtained in the acylation step and carboxy groups of acylated products of an aromatic dicarboxylic acid and an aromatic hydroxycarboxylic acid in such a way as to cause ester exchange.

The acylation step and the polymerization step may be carried out in the presence of a heterocyclic organic base compound represented by the following formula (5).

### [Chemical Formula 1]

In the above formula (5), R¹ to R⁴ each independently represent a hydrogen atom, an alkyl group having 1 to 4 carbon atoms, a hydroxymethyl group, a cyano group, a cyanoalkyl group having an alkyl group having 1 to 4 carbon atoms, a cyanoalkoxy group having an alkoxy group having 1 to 4 carbon atoms, a carboxy group, an amino group, an aminoalkyl group having 1 to 4 carbon atoms, an aminoalkoxy group having 1 to 4 carbon atoms, a phenyl group, a benzyl group, a phenylpropyl group, or a formyl group.

The heterocyclic organic base compound of the above formula (5) is preferably an imidazole derivative wherein R¹ is an alkyl group having 1 to 4 carbon atoms, and R² to R⁴ are each a hydrogen atom.

Thereby, the reactivity of the acylation reaction in the acylation step and the ester exchange reaction in the polymerization step can be further improved. In addition, the color tone of a molded article obtained by the pellets of the present embodiment can be better.

Among the heterocyclic organic base compounds, either one or both of 1-methylimidazole and 1-ethylimidazole are particularly preferable because these are easily available.

The amount of the heterocyclic organic base compound used is preferably 0.005 to 1 part by mass when the total amount of the raw material monomers of the liquid crystal polyester resin (that is, an aromatic dicarboxylic acid, an aromatic diol, and an aromatic hydroxycarboxylic acid) is set as 100 parts by mass. In addition, the amount of the heterocyclic organic base compound used is more preferably 0.05 to 0.5 parts by mass per 100 parts by mass of the raw material monomers, from the viewpoint of the color tone and the productivity of the molded article.

The heterocyclic organic base compound may be present at one time during the acylation reaction and the ester exchange reaction, and the addition time may be immediately before the start of the acylation reaction, during the acylation reaction, or between the acylation reaction and the ester exchange reaction. The liquid crystal polyester resin thus obtained has very high melt fluidity and excellent thermal stability.

The amount of the fatty acid anhydride (for example, acetic anhydride) used should be determined in consideration of the amounts of the aromatic diol and the aromatic hydroxycarboxylic acid, as raw material monomers, that are used. Specifically, the amount of the fatty acid anhydride used is preferably 1.0 times or more and 1.2 times or less, more preferably 1.0 times or more and 1.15 times or less, further preferably 1.03 times or more and 1.12 times or less, and particularly preferably 1.05 times or more and 1.1 times or less the total equivalent of the phenolic hydroxy groups included in these raw material monomers.

When the amount of the fatty acid anhydride used is 1.0 times or more the total equivalent of the phenolic hydroxy groups included in the raw material monomers, the acylation reaction easily proceeds, and the unreacted raw material monomers are unlikely to remain in the subsequent polymerization step, and as a result, the polymerization proceeds efficiently. In addition, when the acylation reaction proceeds sufficiently as described above, there is little possibility that the unacylated raw material monomers sublimate to clog the fractionator used at the time of polymerization. On the other hand, when the amount of the fatty acid anhydride used is 1.2 times or less the total equivalent, the liquid crystal polyester resin obtained is unlikely to be colored.

The acylation reaction in the above acylation step is carried out preferably in the temperature range of 130°C to 180°C for 30 minutes to 20 hours, and more preferably between 140°C and 160°C for 1 to 5 hours.

The aromatic dicarboxylic acid used in the above polymerization step may be present in the reaction system during the acylation step. That is, in the acylation step, the aromatic diol, the aromatic hydroxycarboxylic acid, and the aromatic dicarboxylic acid may be present in the same reaction system. This is because neither the carboxy group in the aromatic dicarboxylic acid nor an optionally substituted substituent is affected by the fatty acid anhydride.

Therefore, a method involving sequentially carrying out the acylation step and the polymerization step after the aromatic diol, the aromatic hydroxycarboxylic acid, and the aromatic dicarboxylic acid are fed into the reactor may be used, or a method involving feeding the aromatic diol and the aromatic dicarboxylic acid into the reactor to carry out the acylation step and then further feeding the aromatic dicarboxylic acid into the reactor to carry out the polymerization step may be used. The former method is preferable from the viewpoint of simplifying the production step.

The ester exchange reaction in the above polymerization step is carried out preferably while raising the temperature from 130°C to 400°C at a temperature increase rate of 0.1 to 50°C/min, and further preferably while raising the temperature from 150°C to 350°C at a temperature increase rate of 0.3 to 5°C/min.

In addition, when the ester exchange reaction in the polymerization step is carried out, in order to shift the equilibrium, a fatty acid (for example, acetic acid) produced as a by-product and the unreacted fatty acid anhydride (for example, acetic anhydride) are preferably evaporated and distilled out of the system. At this time, by refluxing a part of the distilled fatty acid and returning the same to the reactor, it is also possible to condense or reverse sublimate the raw material monomers or the like that evaporates or sublimates with the fatty acid and return the same to the reactor.

In the acylation reaction in the acylation step and the ester exchange reaction in the polymerization step, a batch apparatus may be used or a continuous apparatus may be used as the reactor. A liquid crystal polyester resin that can be used in the present embodiment can be obtained by any of the reaction apparatuses.

After the above polymerization step, a step of increasing the molecular weight of the liquid crystal polyester resin obtained in this polymerization step may be carried out. For example, if the liquid crystal polyester resin obtained in the polymerization step is cooled and then ground to prepare a powder-shaped liquid crystal polyester resin, and further, this powder is heated, it is possible to increase the molecular weight of the liquid crystal polyester resin.

In addition, after the powder-shaped liquid crystal polyester resin obtained by cooling and grinding is granulated to prepare a pellet-shaped liquid crystal polyester resin, the pellet-shaped liquid crystal polyester resin may be heated to increase the molecular weight of the liquid crystal polyester resin. Increasing the molecular weight by these methods is referred to as solid phase polymerization in the art.

The solid phase polymerization is particularly effective as a method for increasing the molecular weight of the liquid crystal polyester resin.

By increasing the molecular weight of the liquid crystal polyester resin, it becomes easy to obtain a liquid crystal polyester resin having a suitable flow starting temperature as described later.

As the reaction conditions for the solid phase polymerization, a method for heat-treating a solid resin in an inert gas atmosphere or under reduced pressure for 1 to 20 hours is usually adopted. The polymerization conditions related to this solid phase polymerization can be appropriately optimized after determining the flow starting temperature of the resin obtained by the melt polymerization. Examples of an apparatus used for the heat treatment include a known dryer, reactor, inert oven, and electric furnace.

The liquid crystal polyester resin included in the pellets of the present embodiment has a flow starting temperature of preferably 400°C or less, more preferably 380°C or less, and further preferably 370°C or less, as determined by the following method. By a liquid crystal polyester having a flow starting temperature equal to or less than the above upper limit value, it is possible to improve the molding efficiency of injection molding at a practical temperature. On the other hand, pellets comprising a liquid crystal polyester having a flow starting temperature equal to or less than the above upper limit value tends to easily have a long plasticization time, particularly in a large injection molding machine. However, since the pellets of the present embodiment have a specific shape having an average length (L) of 3.2 to 12 mm, an average diameter (D) of 3.2 to 6.0 mm, and a value of the average length (L)/the average diameter (D) of 1 to 2, the pellets can exert an excellent effect on shortening the plasticization time.

The flow starting temperature of the liquid crystal polyester included in the pellets of the present embodiment, which is determined by the following method, may be 270°C or more, 280°C or more, or 300°C or more. By a liquid crystal polyester having a flow starting temperature equal to or more than the above lower limit value, the molded article obtained is a molded article having a high degree of heat resistance.

The temperature range of the flow starting temperature of the liquid crystal polyester included in the pellets of the present embodiment may be, as an example, 270°C or more and 400°C or less, 280°C or more and 380°C or less, or 300°C or more and 370°C or less.

When the pellets of the embodiment comprises a mixture of two or more liquid crystal polyester resins different from each other in flow starting temperature, the flow starting temperature of the liquid crystal polyester can be the flow starting temperature of the mixture.

Here, the flow starting temperature is a temperature at which the melt viscosity shows 4800 Pa·s (48000 poises) when a liquid crystal polyester is extruded from a nozzle at a temperature increase rate of 4°C/min under a load of 9.8 MPa (100 kg/cm²) by a capillary type rheometer equipped with a die having an inner diameter of 1 mm and a length of 10 mm. The flow starting temperature is an index representing the molecular weight of a liquid crystal polyester that is well known in the art (see "Liquid Crystalline Polymer - Synthesis/Molding/Application-", edited by Naoyuki Koide, pp. 95-105, CMC, published on 5, June 1987). As an apparatus for measuring the flow starting temperature, for example, a flow characteristic evaluation apparatus "Flowtester CFT-500D" manufactured by Shimadzu Corporation can be used.

The melt viscosity of the pellets of the present embodiment (that is, the melt viscosity of a liquid crystal polyester resin composing the pellets when the pellets are composed only of the liquid crystal polyester resin, or the melt viscosity of a liquid crystal polyester composition composing the pellets) is preferably 100 Pa·s or less, preferably 90 Pa·s or less, and more preferably 80 Pa·s or less at "flow starting temperature + 20°C" of the liquid crystal polyester. When the melt viscosity of the pellets is within this range, backflow tends to easily occur during the molding, and it can be expected that the effect of shortening the plasticization time is more effectively exerted.

The lower limit value of the melt viscosity of the pellets at the "flow starting temperature + 20°C" may be, as an example, 30 Pa·s or more, 40 Pa·s or more, or 50 Pa·s or more.

The numerical range of the melt viscosity of the pellets at the "flow starting temperature + 20°C may be, as an example, 30 Pa·s or more and 100 Pa·s or less, 40 Pa·s or more and 90 Pa·s or less, or 50 Pa·s or more and 80 Pa·s or less.

The "flow starting temperature + 20°C" of the pellets is a temperature that serves as a guide for the "molding temperature" in the process for producing an injection molded article. For example, the temperature of the cylinder 24 can be set to a temperature for which "flow starting temperature + 20°C" of the pellets is taken as a guide, and the pellets can be heated and melted.

The melt viscosity of the pellets can be measured by the following method by a flow tester (for example, "CFT-500EX" manufactured by Shimadzu Corporation).

A die having a nozzle having an inner diameter of 1 mm and a length of 10 mm is attached to the tip of a cylinder, and the cylinder is heated to a measurement temperature (for example, the liquid crystal polyester resin's "flow starting temperature + 20°C"). The cylinder is filled with about 2 g of the resin or the resin composition composing the pellets and held for 5 minutes to melt the resin or the resin composition. A load of 9.8 MPa is applied to the molten resin or resin composition, and the viscosity of the melt extruded from the nozzle is measured.

The liquid crystal polyester resin having the above suitable flow starting temperature can be easily obtained by appropriately optimizing the structural units constituting the liquid crystal polyester resin. That is, when the linearity of the molecular chain of the liquid crystal polyester resin is improved, the flow starting temperature thereof tends to increase.

For example, the structural unit derived from terephthalic acid improves the linearity of the liquid crystal polyester resin molecular chain. On the other hand, the structural unit derived from isophthalic acid improves the flexibility of the liquid crystal polyester resin molecular chain (decreases the linearity). Therefore, by controlling the copolymerization ratio of terephthalic acid and isophthalic acid, a liquid crystal polyester resin having a desired flow starting temperature can be obtained.

When the above liquid crystal polyester resin mixture is used, at least one liquid crystal polyester resin is preferably a polymer obtained by polymerizing a raw material monomer including an aromatic hydroxycarboxylic acid in the presence of an imidazole compound. The liquid crystal polyester resin thus obtained has very high melt fluidity at the time of melting and excellent thermal stability.

In addition, in the liquid crystal polyester resin used in the present embodiment, it is preferable to optimize the copolymerization ratio of terephthalic acid and isophthalic acid. Thereby, as described above, the linearity of the molecular chain of the liquid crystal polyester resin can be controlled. As a result, it is possible to produce each of a plurality of liquid crystal polyester resins different from each other in flow starting temperature.

The content of the liquid crystal polyester resin based on the total mass of the pellets of the embodiment may be 30% by mass or more and 100% by mass or less, 40% by mass or more and 99% by mass or less, or 50% by mass or more and 95% by mass or less.

In addition to the liquid crystal polyester resin described above, the pellets of the embodiment can contain, if necessary, the following inorganic filler and a further component such that the total content (% by mass) of the liquid crystal polyester resin, the inorganic filler, and the further component in the pellets may not exceed 100% by mass.

### [Inorganic filler]

The pellets of the embodiment may be pellets of a liquid crystal polyester resin composition including a liquid crystal polyester resin and further an inorganic filler.

The inorganic filler used in the present embodiment may be a fibrous filler, a plate-like filler, or a granular filler.

In the liquid crystal polyester resin composition of the present embodiment, the content rate of the inorganic filler is preferably more than 0 parts by mass and 100 parts by mass or less, more preferably 10 parts by mass or more and 100 parts by mass or less, and further preferably 30 parts by mass or more and 90 parts by mass or less per 100 parts by mass of the liquid crystal polyester resin.

Examples of the fibrous filler include a glass fiber; a carbon fiber such as a PAN-based carbon fiber or a pitch-based carbon fiber; a ceramic fiber such as a silica fiber, an alumina fiber, or a silica alumina fiber; and a metal fiber such as a stainless steel fiber. Examples of the glass fiber include a chopped glass fiber and a milled glass fiber. In addition, examples of the fibrous filler also include a whisker such as a potassium titanate whisker, a barium titanate whisker, a wollastonite whisker, an aluminum borate whisker, a silicon nitride whisker, and a silicon carbide whisker.

The chopped glass fiber referred to here is a product (glass chopped strand) obtained by directly paralleling and bundling a plurality of single glass fibers drawn out from spinning nozzles to obtain a fiber bundle (glass strand) and cutting the fiber bundle such that the fiber bundle length may be 1.5 to 25 mm.

The milled glass fiber refers to a product (milled fiber) obtained by grinding or cutting a strand into an extremely short length (about less than 1 mm).

Examples of the plate-like inorganic filler include talc, a mica, graphite, wollastonite, a glass flake, barium sulfate, and calcium carbonate. The mica may be muscovite, phlogopite, fluorophlogopite, or tetrasilicic mica.

Examples of the granular inorganic filler include silica, alumina, titanium oxide, a glass bead, a glass balloon, boron nitride, silicon carbide, and calcium carbonate.

In the pellets of the embodiment, the inorganic filler which may be included in the resin composition is preferably at least one selected from the group consisting of a glass fiber, talc, and a mica.

The inorganic filler that may be included in the resin composition is more preferably at least one selected from the group consisting of a chopped glass fiber, a milled glass fiber, talc, and a mica.

The inorganic filler that may be included in the resin composition is further preferably at least one selected from the group consisting of a chopped glass fiber, a milled glass fiber, and talc.

### [Glass fiber]

The pellets of the embodiment may be pellets of a liquid crystal polyester resin composition including a liquid crystal polyester resin and further a glass fiber as an inorganic filler. When the resin composition further includes a glass fiber, it is possible to provide pellets that are suitable for producing an injection molded article by a large injection molding machine, is excellent in shortening the plasticization time in injection molding, and has an excellent effect of reducing the value of the torque applied to a motor during the kneading in injection molding.

The number average fiber length of the glass fiber that may be included in the liquid crystal polyester resin composition of the present embodiment may be 10 µm or more and 2000 µm or less, 20 µm or more and 1000 µm or less, 30 µm or more and 800 µm or less, 40 µm or more and 500 µm or less, or 45 µm or more and 400 µm or less.

When the number average fiber length of the glass fiber is within the above numerical range, the plasticization time of injection molding can be good. When the number average fiber length of the glass fiber is equal to or more than the above lower limit value, the flexural modulus of the molded article obtained by molding the pellets of the present embodiment is high.

The glass fiber that may be included in the liquid crystal polyester resin composition of the present embodiment preferably has an approximately circular cross-sectional shape in the radial direction. It can be confirmed by an SEM that the cross-sectional shape of the above glass fiber in the radial direction is approximately circular.

The diameter of the above glass fiber is preferably 5 µm or more and 17 µm or less, more preferably 6 µm or more and 15 µm or less, and further preferably 9 µm or more and 12 µm or less.

### (Content ratio)

In the liquid crystal polyester resin composition of the present embodiment, the content rate of the glass fiber is preferably more than 0 parts by mass and 100 parts by mass or less, and more preferably 10 parts by mass or more and 100 parts by mass or less per 100 parts by mass of the liquid crystal polyester resin.

When the content rate of the glass fiber is too low, a ratio between a shrinkage rate in the flow direction of the molded article and that in a direction perpendicular thereto becomes large, and warpage or distortion is likely to occur in the molded article. When the content rate of glass is too high, the fluidity of the resin composition at the time of molding deteriorates, and the moldability and processability are likely to decrease.

The content rate of the glass fiber is preferably 10 parts by mass or more and 70 parts by mass or less, and more preferably 20 parts by mass or more and 60 parts by mass or less per 100 parts by mass of the liquid crystal polyester resin.

Examples of the type of the above glass fiber include E-glass, A-glass, C-glass, D-glass, AR-glass, R-glass, S glass, or a mixture thereof. Among these, E-glass is preferable in terms of its having excellent strength and being easily available.

As the above glass fiber, a weak alkaline fiber is excellent in mechanical strength (tensile strength and Izod impact strength) and can be preferably used. In particular, a glass fiber having a silicon oxide content of 50% by mass or more and 80% by mass or less based on the total mass of the above glass fiber is preferably used, and a glass fiber having a silicon oxide content of 65% by mass or more and 77% by mass or less is more preferably used.

The above glass fiber may be a fiber treated with a coupling agent such as a silane-based coupling agent or a titanium-based coupling agent, if necessary.

The above glass fiber may be coated with a thermoplastic resin such as a urethane resin, an acrylic resin, or an ethylene/vinyl acetate copolymer, or a thermosetting resin such as an epoxy resin. In addition, the above raw fiber may be treated with a sizing agent.

### (Method for measuring number average fiber length of glass fiber)

The number average fiber length of a glass fiber is measured as follows.

First, 5 g of pellets of the liquid crystal polyester resin composition of the present embodiment is heated in a muffle furnace (for example, "FP410" manufactured by Yamato Scientific Co., Ltd.) at 600°C for 4 hours in an air atmosphere to remove the resin and then, an ashing residue including a glass fiber is obtained. Zero point three grams of an ashed sample is added into 50 mL of pure water, and an ultrasonic wave is applied for 5 minutes to uniformly disperse the ashed sample to obtain a sample liquid. A surfactant may be appropriately added to the specimen liquid in order to improve the dispersibility.

Next, this sample liquid in which the glass fiber is dispersed in pure water is placed in a 5 mL sample cup and diluted 5-fold with pure water to obtain a sample liquid. Under the following conditions, an image of a glass component in the liquid is captured with a particle shape image analyzer (for example, "Rapid VUE" manufactured by BECKMAN COULTER, Inc.). In the above measurement method, the time point when the number of glass fibers cumulatively counted from the start of the measurement reaches 50000 is set as the time point when the measurement ends.

### (Conditions)

Number of fibers measured: 50000
Dispersion medium: Water

The obtained image is binarized, the circumscribed rectangle major diameters of the glass fibers in the binarized image are measured, and the average value of 50000 measured values is defined as the number average fiber length of the glass fibers.

In this description, the "circumscribed rectangle major diameter" means the length of a long side of a rectangle circumscribing a particle. The circumscribed rectangle is set such that the area of the rectangle may be minimized.

### (Method for measuring diameter of glass fiber)

The above ashing residue including a glass fiber is observed with an SEM at a magnification of 1000 times, the diameters of 100 glass fibers randomly selected from the SEM image are each measured, and the average value of 100 measured values is adopted as the diameter of the glass fiber of the present embodiment.

### [Talc]

Examples of the talc that may be included in the liquid crystal polyester resin composition of the present embodiment include a ground material of a mineral consisting of magnesium hydroxide and a silicate mineral. The talc according to the present embodiment may have a structure formed by sandwiching an octahedral structure composed of three magnesium (Mg) oxides/hydroxides between four tetrahedral structures formed by oxides of four atoms of silicon (Si).

Examples of a process for producing the talc according to the embodiment include a known production method, and examples thereof include a dry grinding method such as a milling type grinding method using a roller mill, a Raymond mill, or the like, an impact type grinding method using an atomizer, a hammer mill, a micron mill, or the like, or a collision type grinding method using a jet mill, a ball mill, or the like.

In addition, a wet grinding method involving dispersing a ground talc powder in water to form a slurry having a flowable viscosity, and grinding the same with a ball mill, a bead mill, a wet jet mill, a discoplex, or the like may be used. Among the above production methods, the dry grinding method is preferable in terms of the method being low in cost and easy to be carried out.

The surface of the talc according to the embodiment may be treated with a coupling agent or the like for the purpose of improving the wettability between the talc and a resin (liquid crystal polyester resin). In addition, talc subjected to heat treatment processing may be used for the purpose of removing an impurity and hardening talc. In addition, compressed talc may be used for the purpose of facilitating the handling.

The average particle diameter of the talc can be measured by laser diffractometry. With a scattering type particle diameter distribution measuring apparatus (for example, "LA-9050V2" manufactured by HORIBA, Ltd.) as a measuring apparatus, the average particle diameter can be calculated under the following measurement conditions with the talc dispersed in water.

### [Measurement conditions]

Particle refractive index: 1.59-0.11
Dispersion medium: Water
Dispersion medium refractive index: 1.33

In the liquid crystal polyester resin composition of the present embodiment, the content rate of the talc is preferably more than 0 parts by mass and 100 parts by mass or less, more preferably 10 parts by mass or more and 100 parts by mass or less, further preferably 10 parts by mass or more and 85 parts by mass or less, and particularly preferably 20 parts by mass or more and 65 parts by mass or less per 100 parts by mass of the liquid crystal polyester resin.

The liquid crystal polyester resin composition having a talc content rate in such a range is excellent in both the molding and processability and the mechanical strength of the molded article.

### [Mica]

In the pellets of the embodiment, examples of the mica that may be included in the liquid crystal polyester resin composition includes a ground material of a silicate mineral including aluminum, potassium, magnesium, sodium, iron, or the like. In addition, the mica may be a mineral having a structure formed by sandwiching an octahedral structure composed of two or three metal oxides/hydroxides between four tetrahedral structures formed by oxides of three atoms of silicon (Si) and one atom of aluminum (Al).

The mica used in the present embodiment may be any of muscovite, phlogopite, fluorophlogopite, tetrasilicic mica, and an artificially produced synthetic mica. Two or more thereof may be included.

The mica used in the present embodiment preferably substantially consists only of muscovite.

Examples of a process for producing the mica according to the embodiment include water flow type jet grinding, wet grinding, dry ball mill grinding, pressurized roller mill grinding, air flow type jet mill grinding, and dry grinding using an impact grinder such as an atomizer. A mica produced by a wet grinding method is preferable because the mica can be ground thinly and finely.

When the wet grinding method is carried out, a mica before grinding is dispersed in water. At that time, in order to improve the dispersion efficiency of the mica before grinding, it is common practice to add an additive such as an flocculation and sedimentation agent or a sedimentation aid such as polyaluminum chloride, aluminum sulfate, aluminum sulfate, ferrous sulfate, ferric sulfate, chlorinated copperas, polyiron sulfate, polyferric chloride, an iron-silica inorganic polymer flocculation agent, a ferric chloride-silica inorganic polymer flocculation agent, slaked lime (Ca(OH)₂), caustic soda (NaOH), or soda ash (Na₂CO₃). However, these additives cause the degradation of the liquid crystal polyester in some cases. Therefore, the mica according to the present embodiment is preferably one for which no flocculation and sedimentation agent or sedimentation aid has been used during the wet grinding.

In the liquid crystal polyester resin composition of the present embodiment, the content rate of the mica is preferably more than 0 parts by mass and 100 parts by mass or less, more preferably 10 parts by mass or more and 100 parts by mass or less, further preferably 20 parts by mass or more and 90 parts by mass or less, and particularly preferably more than 20 parts by mass and 80 parts by mass or less per 100 parts by mass of the liquid crystal polyester resin.

Pellets of the liquid crystal polyester resin composition having a mica content rate in such a range is excellent in both the molding and processability and the mechanical strength of the molded article.

### [Further component]

The liquid crystal polyester resin composition may include one or more further components such as an organic filler, an additive, or a resin other than the liquid crystal polyester resin as long as the effect of the present invention is exhibited.

Examples of the organic filler include a polyester fiber, an aramid fiber, and a cellulose fiber.

Examples of the additive include an additive usually used in a resin composition. Examples of such an additive include a stabilizer, an ultraviolet absorber, a plasticizer, a flame retardant, a flame retardant aid, an antistatic agent, a surfactant, a colorant, a lubricant, and a release agent.

Examples of the stabilizer include hindered phenol, hydroquinone, a phosphite, and a substitution product thereof.

Examples of the ultraviolet absorber include resorcinol, a salicylate, benzotriazole, and benzophenone.

Examples of the colorant include a material including a dye such as nitrosine and a pigment such as cadmium sulfide, phthalocyanine, or carbon black.

Examples of the lubricant include a fatty acid such as stearic acid or montanic acid, an amide thereof, an ester thereof, a half ester thereof with a polyhydric alcohol, stearyl alcohol, stearamide, and polyethylene wax.

The liquid crystal polyester resin composition of the present embodiment can be improved in molding and processability by further adding a release agent. Examples of the release agent include a fatty acid such as montanic acid, a salt thereof, an ester thereof, a half ester thereof with a polyhydric alcohol, stearyl alcohol, stearamide, and polyethylene wax, and preferable examples thereof include a fatty acid ester of pentaerythritol.

The content rate of the lubricant is preferably 0.001 parts by mass or more and 1.0 part by mass or less, more preferably 0.002 parts by mass or more and 0.8 parts by mass or less, and further preferably 0.002 parts by mass or more and 0.1 parts by mass or less per 100 parts by mass of the liquid crystal polyester resin. When the content rate of the lubricant is equal to or less than the above upper limit value, the effect of shortening the plasticization time due to the pellets having a specific shape tends to be more effectively exerted, and when the content rate of the lubricant is equal to or more than the above lower limit value, the effect of the lubricant that improves the plasticization time by reducing the friction between pellets or the like can be easily obtained.

In addition, from the same viewpoint, the content rate of the lubricant is preferably 0.001 parts by mass or more and 0.5 parts by mass or less, and more preferably 0.002 parts by mass or more and 0.1 parts by mass or less based on the total mass (100% by mass) of the pellets of the embodiment.

Examples of the resin other than the liquid crystal polyester resin include a thermoplastic resin other than the liquid crystal polyester such as polypropylene, polyamide, a polyester other than the liquid crystal polyester, polysulfone, polyether sulfone, polyphenylene sulfide, polyether ketone, polycarbonate, polyphenylene ether, or polyetherimide; and a thermosetting resin such as a phenolic resin, an epoxy resin, a polyimide resin, or a cyanate resin. The content of the resin other than the liquid crystal polyester resin may be usually 0 to 20 parts by mass per 100 parts by mass of the liquid crystal polyester resin.

The ratio of the content of each component in the pellets of the embodiment is, as an example, such that, based on the total mass (100% by mass) of the pellets of the embodiment,
preferably, the content of the liquid crystal polyester resin may be 30% by mass or more and 90% by mass or less, and the content of the inorganic filler may be 5% by mass or more and 50% by mass or less,
more preferably, the content of the liquid crystal polyester resin may be 30% by mass or more and 90% by mass or less, the content of the inorganic filler may be 5% by mass or more and 50% by mass or less, and the content of an additive such as a release agent or a lubricant may be 0% by mass or more and 1% by mass or less,
further preferably, the content of the liquid crystal polyester resin may be 40% by mass or more and 85% by mass or less, the content of the inorganic filler may be 10% by mass or more and 45% by mass or less, and the content of an additive such as a release agent or a lubricant may be 0.001% by mass or more and 1% by mass or less, or
particularly preferably, the content of the liquid crystal polyester resin may be 50% by mass or more and 80% by mass or less, the content of the inorganic filler may be 15% by mass or more and 40% by mass or less, and the content of an additive such as a release agent or a lubricant may be 0.002% by mass or more and 0.8% by mass or less.

### (Application)

The pellets of the embodiment are preferably used as a molding material used in the production of a molded article, and more preferably used as a molding material used in the production of an injection molded article.

The pellets of the embodiment are suitable for producing a large injection molded article, and thus an injection molding machine used for the injection molding is preferably an injection molding machine that can produce a large injection molded article.

The injection molding machine that can produce a large injection molded article is a large injection molding machine having a large value of the screw diameter, the injection volume, the maximum clamping force, or the like.

In this description, an injection molding machine having the following screw diameter, injection volume, or maximum clamping force is given as an example of a "large" injection molding machine. Further, an injection molding machine having a screw diameter, an injection volume, or a maximum clamping force having a value smaller than the following screw diameter, injection volume, or maximum clamping force is given as an example of a "small" injection molding machine.

As an example, the pellets of the embodiment are preferably used as a molding material in an injection molding machine of which screw has a diameter of 30 mm or more, more preferably used as a molding material in an injection molding machine having a screw diameter of 30 mm or more and 180 mm or less, further preferably used as a molding material in an injection molding machine of which screw has a diameter of 40 mm or more and 90 mm or less, and particularly preferably used as a molding material in an injection molding machine of which screw has a diameter of 40 mm or more and 65 mm or less.

The pellets of the embodiment exert a particularly excellent effect in shortening the plasticization time in an injection molding machine provided with a screw having such a diameter.

When the pellets of the embodiment are used as a molding material in an injection molding machine of which screw has a diameter of 90 mm or less, the pellets exert a particularly excellent effect on the effect of reducing the value of the torque applied to a motor during the kneading in injection molding.

As an example, the pellets of the embodiment are preferably used as a molding material in an injection molding machine which has an injection volume (maximum volume of an injection material that can be injected in one injection) of 100 cm³ or more, more preferably used as a molding material in an injection molding machine which has an injection volume of 120 cm³ or more and 20000 cm³ or less, more preferably used as a molding material in an injection molding machine which has an injection volume of 150 cm³ or more and 5000 cm³ or less, further preferably used as a molding material in an injection molding machine which has an injection volume of 160 cm³ or more and 3500 cm³ or less, and particularly preferably used as a molding material in an injection molding machine which has an injection volume of 170 cm³ or more and 1000 cm³ or less.

The pellets of the embodiment exert a particularly excellent effect in shortening the plasticization time in an injection molding machine which has such an injection volume.

When the pellets of the embodiment are used as a molding material in an injection molding machine which has an injection volume of 3500 cm³ or less, the pellets exert a particularly excellent effect on the effect of reducing the value of the torque applied to a motor during the kneading in injection molding.

As an example, the pellets of the embodiment are preferably used as a molding material in injection molding in which the injection volume of a molded article (volume of an injection material molded in one injection) is 50 cm³ or more, more preferably used as a molding material in injection molding in which the injection volume of a molded article is 50 cm³ or more 20000 cm³ or less, further preferably used as a molding material in injection molding in which the injection volume of a molded article is 80 cm³ or more and 10000 cm³ or less, and particularly preferably used as a molding material in injection molding in which the injection volume of a molded article is 100 cm³ or more and 5000 cm³ or less.

As an example, the pellets of the embodiment are preferably used as a molding material in an injection molding machine having a maximum clamping force of 980 kN or more, more preferably used as a molding material in an injection molding machine having a maximum clamping force of 1300 kN or more and 25000 kN or less, and further preferably used as a molding material in an injection molding machine having a maximum clamping force of 1500 kN or more and 10000 kN or less.

The pellets of the embodiment exert a particularly excellent effect in shortening the plasticization time in an injection molding machine having such a maximum clamping force.

As the injection molding machine that can produce a large injection molded article, a known injection molding machine can be used, and examples thereof include SE180EV manufactured by Sumitomo Heavy Industries, Ltd., J450AD manufactured by JSW, and FNX3602-100A/FVX860III manufactured by Nissei Plastic Industrial Co., Ltd. When the above screw diameter, injection volume, and maximum clamping force are specified in the specifications of a commercially available injection molding machine, values thereof can be adopted. When the screw diameter is not specified, the diameter of a circumscribing perfect circle in a projection image from a direction perpendicular to the axial direction of the screw is taken as the screw diameter.

The following reasons can be considered as the reasons why the pellets of the embodiment are preferably used as a molding material in a large injection molding machine.

First, in a large molding machine, it is considered that temperature unevenness is likely to occur when the pellets are heated.

In the case of a small injection molding machine, it is considered that the heat heated by an external (outside the cylinder) heater is easily transferred to the pellets in the cylinder uniformly and that a large difference in the state of melting between the pellets present on the outer peripheral side and the pellets present on the center side in the cylinder is unlikely to occur.

On the other hand, in the case of a large injection molding machine, the screw diameter is large, and thus it is presumed that a temperature gradient is likely to occur in the pellets in the cylinder when the heat is transferred from the outside. That is, it is presumed that a phenomenon in which the pellets present in the outer peripheral portion of the screw is melted in the root portion (hopper side), whereas the pellets in the central portion are in an unmelted state occurs. Such a state causes a state in which the previously melted resin firmly adheres to the unmelted pellets to disturb the extrusion and the kneaded material cannot be sent forward even if the screw is rotated. That is, when a large molding machine is used, it is considered that if the pellets are easily melted excessively, the temperature unevenness becomes remarkable and the above phenomenon tends to easily occur.

The pellets of the embodiment have a specific shape having an average length (L) of 3.2 to 12 mm, an average diameter (D) of 3.2 to 6.0 mm, and a value of the average length (L)/the average diameter (D) of 1 to 2. According to the pellets of the embodiment, it is considered that by making the size and the shape of the pellets specific, the state of melting of the pellets toward temperature unevenness is made uniform, which contributes to the shortening of the plasticization time.

From the above viewpoint, the volume of the pellets of the embodiment is preferably large to some extent. In addition, the pellets of the embodiment are preferably used as a molding material in an injection molding machine that satisfies the following relation to the screw diameter (the diameter of the screw). The above relation may be one satisfying the relation in which the value expressed by pellet volume (mm³)/screw diameter (mm) when the pellets are melted and injection molded by an injection molding machine is 0.5 or more, one satisfying the relation in which the value is 0.5 or more and 20 or less, one satisfying the relation in which the value is 0.6 or more and 10 or less, or one satisfying the relation in which the value is 0.8 or more and 7 or less.

The following reasons can also be considered as the reasons why the pellets of the embodiment are preferably used as a molding material in a large injection molding machine.

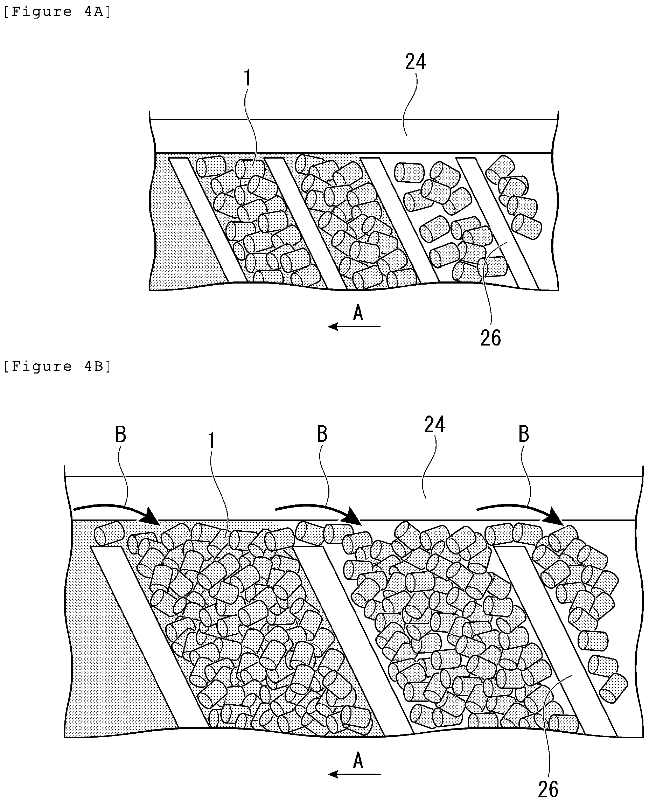

Figure 4A and Figure 4B are each a schematic view showing an example of a state in which pellets 1 in a cylinder 24 are extruded to a tip direction A of the cylinder by a screw and the pellets 1 are gradually melted in an injection molding machine.

Figure 4A shows such a state in a small injection molding machine, and Figure 4B shows such a state in a large injection molding machine.

In a small injection molding machine, the pellets entering a groove between blades of the screw are extruded in the tip direction A of the cylinder with the movement of the screw (Figure 4A). However, in the case of a large injection molding machine, it is considered that the groove between blades of the screw and the gap between the screw and the cylinder are designed to be wider than those of a small one, and thus backflow B of the pellets in the direction opposite to the tip direction A is likely to occur (Figure 4B). When the viscosity of the molten resin is high, the entire pellets are extruded to the tip direction A, and thus the backflow does not become a large problem, but in the case of pellets comprising a molten resin having a low viscosity such as the liquid crystal polyester, it is assumed that the backflow B is likely to occur, and this is considered to be a factor that lengthens the plasticization time.

A liquid crystal polyester resin has been mainly adopted for a small electronic part, and the problem of lengthening the plasticization time in a large injection molding machine has not been recognized in the first place, and a factor that lengthens the plasticization time has been unable to be easily estimated.

Normally, small pellets can shorten the time required for melting and is considered to be advantageous in shortening the plasticization time in an injection molding machine.

In addition, particularly a small injection molding machine has the following background that the zone of the cylinder for melting pellets is not long, and thus the pellets needs to be melted in a short time, and all the more because of this, a smaller pellet size is better.

On the other hand, the pellets of the embodiment have a specific shape having an average length (L) of 3.2 to 12 mm, an average diameter (D) of 3.2 to 6.0 mm, and a value of the average length (L)/the average diameter (D) of 1 to 2.

The fact that the pellets of the present embodiment which have a relatively large pellet size rather exhibits an excellent effect in shortening the plasticization time, and further that pellets having a specific (L)/(D) ratio is an important requirement for shortening the plasticization time are information first found by the present inventors and are extremely useful in the technical field of injection molding of a liquid crystal polyester resin.

### <Process for producing pellets>

As a process for producing the pellets of the embodiment, provided is a process for producing the pellets, including melt kneading a liquid crystal polyester resin and a further component such as an inorganic filler used if necessary to form a strand and then cutting the strand. Here, for example, by adjusting the shape of a nozzle of an extruder or the like that extrudes a strand to adjust the shape of the strand, pellets having a desired average diameter (D) can be produced, and by appropriately regulating the cutting width, pellets having a desired average length (L) can be produced.

As another aspect, an example of the process for producing the pellets of the embodiment is a process for producing the pellets, including melt kneading a raw material including the liquid crystal polyester resin to form a strand and then cutting the strand, wherein the average diameter (D) of the pellets is an average diameter of cut faces formed by the cutting, and the average length (L) of the pellets is an average length between the cut faces.

Examples of the above liquid crystal polyester resin and further component such as an inorganic filler include those given as examples in the above «Pellets», and the description thereof will be omitted here.

As an example, the process for producing the pellets of the present embodiment can include the following steps (i) to (iii).
Step (i): A step of melt kneading a liquid crystal polyester resin and a further component such as an inorganic filler used if necessary by an extruder to obtain a melt kneaded material, and extruding the melt kneaded material from a nozzle of the extruder to obtain a strand
Step (ii): A step of conveying the strand extruded from the nozzle of the extruder by a belt cooler to solidify the strand
Step (iii): A step of cutting the solidified strand by a fixed blade and a rotary blade included in a pelletizer with pulling out the solidified strand by pull-out rolls to obtain pellets of the liquid crystal polyester resin

The step (ii) may further include the following steps (ii-1) and step (ii-2).
Step (ii-1): A step of conveying the strand by a belt cooler, and spraying water toward the strand-conveyed direction by a spray nozzle apparatus to cool the strand to solidify the strand
Step (ii-2): A step of conveying the strand by a belt cooler, blowing air from an air nozzle apparatus toward the strand conveying direction to remove water adhering to the strand surface and further cool the strand

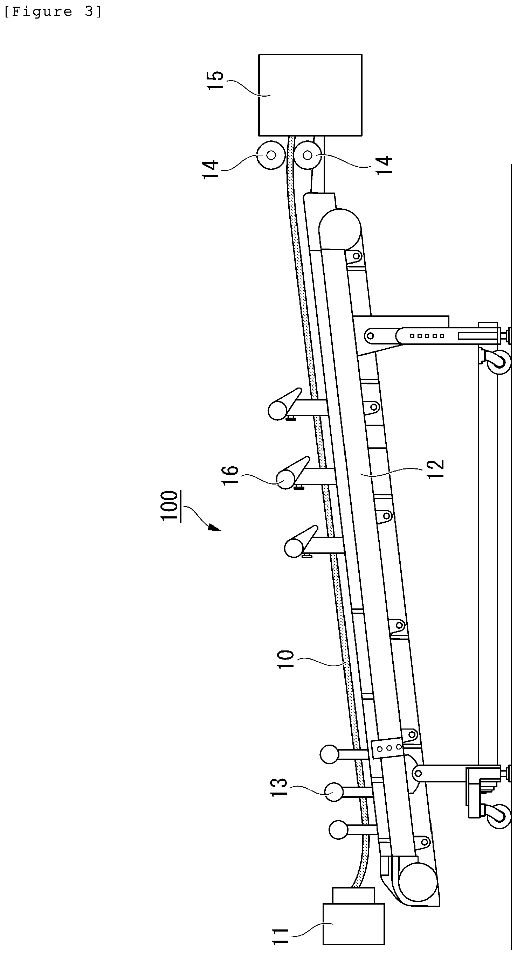

Figure 3 is a schematic view showing an example of a production apparatus used in a process for producing the pellets of the present embodiment.

In the following description, the term "upstream" or "downstream" may be used according to the conveying direction of the strand.

A production apparatus 100 shown in Figure 3 includes an extruder 11 including a nozzle, a belt cooler 12 provided below the extruder 11, a spray nozzle apparatus 13 provided downstream of the extruder 11 and above the belt cooler 12, an air nozzle apparatus 16 provided downstream of the spray nozzle apparatus 13 and above the belt cooler 12, a pair of pull-out rolls 14 provided downstream of the air nozzle apparatus 16 and at the end of the belt cooler 12 in the conveying direction, and a pelletizer 15 having a fixed blade and a rotary blade provided downstream of the pull-out rolls 14.

### Step (i) :

In step (i), a liquid crystal polyester resin, an inorganic filler, and a further component used if necessary are melt kneaded by the extruder 11, and the melt kneaded material of the liquid crystal polyester resin in a molten state is extruded from the nozzle of the extruder 11 to obtain a strand 10. The strand 10 is conveyed on the belt cooler 12 from the upstream side to the downstream side.

The extruder 11 preferably has a cylinder, one or more screws disposed in the cylinder, and one or more feed ports provided in the cylinder, and more preferably further has one or more vent sections provided in the cylinder. In addition, the cylinder is preferably provided with a main feed port and a side feed port downstream of the main feed port in the extrusion direction.

When the cylinder has a vent section, the vent section may use an open vent system in which the vent section is open to the atmosphere, or a vacuum vent system in which the vent section is connected to a water-sealed pump, a rotary pump, an oil diffusion pump, a turbo pump, or the like and held in a vacuum.

The melt kneading temperature of the extruder 11 is determined according to the flow starting temperature of the liquid crystal polyester resin. The melt kneading temperature is generally 20 to 40°C higher than the flow starting temperature of the liquid crystal polyester resin, and is generally in the range of 320 to 400°C. The melt kneading temperature of the extruder 11 can be adjusted by the cylinder temperature of the extruder 11.

The number of discharge ports of the nozzle of the extruder 11 is not particularly limited, and the nozzle may have one or a plurality of discharge ports and usually has 1 to 30 discharge ports. The diameter of and the discharged number of the strand 10 can be adjusted by the shape of the discharge port of the nozzle of the extruder 11 and the number of discharge ports thereof.

In the process for producing the pellets of the present embodiment, the diameter of the discharge port of the nozzle of the extruder 11 can be set such that the average diameter (D) of the pellets may be 3.2 mm or more and 6.0 mm or less.

### Step (ii):

In step (ii), the strand 10 extruded from the nozzle of the extruder 11 is conveyed by the belt cooler 12 from the upstream side to the pelletizer 15 on the downstream side.

As the belt cooler 12, a conventionally known conveyor can be used, and examples thereof include a mesh conveyor, a net conveyor, a belt conveyor, and a vibration conveyor. Among these, a mesh conveyor and a net conveyor (which are the same but only different in name) are preferable because these have good drainage on the conveying surface and can reduce the amount of water adhering to the surface of the strand 10.

### Step (ii-1):

In step (ii-1), water is sprayed by the spray nozzle apparatus 13 toward the strand 10 on the belt cooler 12 extruded from the nozzle of the extruder 11 to adhere the water to the surface of the strand 10 to cool and solidify the strand 10 by heat exchange between the strand 10 and the water and the heat of vaporization of the water.

The spray nozzle apparatus 13 is composed of a pipe having a large number of holes in one row at appropriate intervals, and the large number of holes are provided across the entire width of the strand 10 extruded from the nozzle of the extruder 11.

Preferably, the number of spray nozzle apparatuses 13 is in the range of 1 to 10, and these are appropriately disposed at constant intervals. The number thereof is more preferably 2 to 4. When a plurality of spray nozzle apparatuses 13 are disposed, these may be provided corresponding to a plurality of strands 10, respectively, or a configuration in which some of the strands 10 form a group and a spray nozzle apparatus is provided for each group may be adopted. In either case, by making the spray nozzle apparatuses 13 independently adjustable, it is possible to carry out optimum spray cooling of water according to each of the strands 10.

In the production apparatus 100 shown in Figure 3, three spray nozzle apparatuses 13 are provided.

When a plurality of strands 10 are conveyed, it is preferable to spray water such that the surface temperatures of each of the strands 10 can be uniform by adjusting the amount of water sprayed onto each of the strands 10. This is because if the surface temperature is too different between the strands 10, uniform pellets cannot be obtained, and strand breakage or a defect of a pellet cut face or a whisker tends to occur.

As water sprayed from the spray nozzle apparatus 13, water, pure water, ion exchange water, industrial water, cooling water circulated in a cooling tower, or the like may be used. In addition, the temperature of water sprayed from the spray nozzle apparatus 13 is preferably room temperature (in the range of 15 to 23°C). However, when the temperature of water sprayed is adjusted, it is also possible to use a combination of water having different temperatures in the range of 1 to 50°C based on room temperature.

The spray nozzle apparatus 13 has a mechanism for adjusting the amount of water sprayed or the water temperature (water cooling adjustment mechanism). Examples of the mechanism for adjusting the amount of water sprayed in the spray nozzle apparatus 13 include a known one such as a valve that regulates the flow rate or the pressure of water flowing through a pipe communicating with the spray nozzle of the spray nozzle apparatus 13.

### Step (ii-2):

In step (ii-2), air is blown from the air nozzle apparatus 16 toward the strand 10 on the belt cooler 12 to remove water adhering to the surface of the strand 10 and further cool the strand 10.

The air nozzle apparatus 16 is an apparatus fixed by a bolt or the like at a position at which air can be blown onto the strand 10 on the belt cooler 12. The air nozzle apparatus 16 is an apparatus for removing water adhering to the strand 10 from the surface of the strand 10 and cooling the strand 10, and a known air blow apparatus or dryer apparatus can be used.

The number of air nozzle apparatuses 16 is preferably appropriately adjusted in the range of 1 to 10 such that these may be at constant intervals. The number thereof is more preferably 2 to 4. When a plurality of air nozzle apparatuses 16 are disposed, these may be provided corresponding to a plurality of strands 10, respectively, or a configuration in which some of the strands 10 form a group and an air nozzle apparatus is provided for each group may be adopted. In either case, by making the amount of air blown from air outlets of the air nozzle apparatuses 16 independently adjustable, the amount of air blown from the apparatuses corresponding to the strands 10, respectively, can be adjusted.

In the production apparatus 100 shown in Figure 3, three air nozzle apparatuses 16 are provided.

When a plurality of strands 10 are conveyed, it is preferable to remove water adhering to the surface of the strands 10 while blowing air such that the surface temperatures of the strands 10 can be more uniform by adjusting the blowing surface. This is because if the surface temperatures of the strands 10 are too different, homogeneous pellets cannot be obtained, and strand breakage, a defect of a pellet cut face, or a chip tends to occur.

The air blown may be air, or air in the presence of an inert gas such as nitrogen or argon. From the viewpoint of productivity, air is preferable.

As the air nozzle apparatus 16, a known air nozzle apparatus that can regulate the temperature, incorporating an air volume regulation mechanism, a heater, or a cooling apparatus such that the amount of air blown or the air temperature can be changed, can also be used.

The air flow rate and the air volume of air blown by the air nozzle apparatus 16 are not particularly limited as long as the temperature of the strand 10 can be adjusted within a predetermined range and water adhering to the surface of the strand 10 can be removed, and are preferably an air flow rate and an air volume at which the strand 10 does not meander on the belt cooler 12.

### Step (iii) :

In step (iii), the solidified strand 10 is cut by a fixed blade and a rotary blade included in the pelletizer 15 with pulling out the solidified strand by pulling-out rolls 14 to obtain pellets of the liquid crystal polyester resin.

The pelletizer 15 cuts the strand 10 with a fixed blade and a rotary blade, that is, the strand 10 is sandwiched between the fixed blade and the rotary blade and cut to a predetermined length to form pellets.

As the fixed blade and the rotary blade, the fixed blade and the rotary blade included in the conventionally known pelletizer can be appropriately adopted. The number of blades included in the rotary blade is not particularly limited as long as the rotary blade has a plurality of blades. That is, the number thereof can be the same as the number of blades included in the rotary blade of the conventionally known strand cutter.

The material of the blades included in the fixed blade and the rotary blade is not particularly limited, and examples thereof include a WC-Co-based alloy, a TiN-Ni-based alloy, and a TiC-Ni-based alloy.

In the process for producing the pellets of the present embodiment, the pull-out speed of the pull-out rolls 14 and the rotation speed of the rotary blade can be controlled such that the average length (L) of the pellets may be 3.2 mm or more and 12 mm or less based on the relation between the pellets length and both the pull-out speed of the pull-out rolls 14 and the rotation speed of the rotary blade.

The process for producing the pellets of the present embodiment may comprise a step of mixing the pellets obtained in step (iii) by a tumbler mixer to remove a fine powder generated from the pellets.

The method for removing a fine powder is not particularly limited, and a known method can be adopted.

### <Injection molded article>

The injection molded article of the embodiment is one molded by an injection molding method by the pellets of the embodiment as a molding material.

The injection molded article of the embodiment may be one molded by the process for producing an injection molded article according to the embodiment by the pellets of the embodiment as a molding material.

Examples of the pellets of the embodiment include those described in the above «Pellets», and the description thereof will be omitted here.

The injection molded article of the embodiment can be applied to all applications to which a liquid crystal polyester resin can be generally applied, and among these, is particularly suitable for an application in the automobile field.

As the application in the automobile field, for example, examples of an injection molded article for an automobile interior material include an injection molded article for a ceiling material, an injection molded article for a wheel house cover, an injection molded article for a trunk liner, an injection molded article for an instrument panel skin material, an injection molded article for a steering wheel cover, an injection molded article for an armrest, an injection molded article for a headrest, an injection molded article for a seat belt cover, an injection molded article for a shift lever boot, an injection molded article for a console box, an injection molded article for a horn pad, an injection molded article for a knob, an injection molded article for an airbag cover, an injection molded article for various trims, an injection molded article for various pillars, an injection molded article for a door lock bezel, an injection molded article for a glove box, an injection molded article for a defroster nozzle, an injection molded article for a scuff plate, an injection molded article for a steering wheel, and an injection molded article for a steering column cover.

In addition, as the application in the automobile field, for example, examples of an injection molded article for an automobile exterior material include an injection molded article for a bumper, an injection molded article for a spoiler, an injection molded article for a mudguard, an injection molded article for a side molding, an injection molded article for a radiator grille, an injection molded article for a wheel cover, an injection molded article for a wheel cap, an injection molded article for a cowl belt grille, an injection molded article for an air outlet louver, an injection molded article for an air scoop, an injection molded article for a hood bulge, an injection molded article for a fender, and an injection molded article for a tailgate.

Examples of an interior part of an automobile engine compartment include an injection molded article for a cylinder head cover, an injection molded article for an engine mount, an injection molded article for an air intake manifold, an injection molded article for a throttle body, an injection molded article for an air intake pipe, an injection molded article for a radiator tank, an injection molded article for a radiator support, an injection molded article for a water pump inlet, an injection molded article for a water pump outlet, an injection molded article for a thermostat housing, an injection molded article for a cooling fan, an injection molded article for a fan shroud, an injection molded article for an oil pan, an injection molded article for an oil filter housing, an injection molded article for an oil filler cap, an injection molded article for an oil level gauge, an injection molded article for a timing belt, an injection molded article for a timing belt cover, and an injection molded article for an engine cover.

Examples of an automotive fuel part include a fuel cap, a fuel filler tube, an automotive fuel tank, a fuel sender module, a fuel cutoff valve, a quick connector, a canister, a fuel delivery pipe, and a fuel filler neck.

Examples of an automobile drive train part include a shift lever housing and a propeller shaft.

Examples of an automobile chassis part include a stabilizer and a linkage rod.

Examples of other injection molded article for an automobile part include an injection molded article for an automobile headlamp, an injection molded article for a glass run channel, an injection molded article for a weather strip, an injection molded article for a hose or an injection molded article for a tube such as an injection molded article for a drain hose or an injection molded article for a window washer tube, an injection molded article for a rack and pinion boot, and an injection molded article for a gasket. Among these, the injection molded article of the embodiment can be preferably used for a member that requires rigidity.

In addition to the above, examples of an application to which the molded article of the present embodiment can be applied also include a sensor, an LED lamp, a connector, a socket, a resistor, a relay case, a switch, a coil bobbin, a capacitor, a variable capacitor case, an optical pickup, an oscillator, various terminal plates, a transformer, a plug, a printed board, a tuner, a speaker, a microphone, a headphone, a small motor, a magnetic head base, a power module, a semiconductor, a liquid crystal display, an FDD carriage, an FDD chassis, a motor brush holder, a parabolic antenna, a computer-related part, a microwave part, an audio/audio device part, a lighting part, an air conditioner part, an office computer-related part, a telephone/FAX-related part, and a copying machine-related part.

The pellets of the embodiment are suitable for producing a large injection molded article. The mass per injection molded article of the embodiment is preferably 100 to 5000 g, more preferably 500 to 4000 g, and further preferably 1000 to 3500 g.

The pellets of the embodiment exert a particularly excellent effect in shortening the plasticization time in the production of an injection molded article having such a mass.

### <<Process for producing injection molded article>>

The process for producing an injection molded article according to the embodiment includes a step of melting the pellets of the embodiment and injection molding the molten pellets by an injection molding machine to obtain an injection molded article.

A known injection molding machine can be used for injection molding. In injection molding, an injection molded article can be obtained by melting a liquid crystal polyester resin pellets in a cylinder equipped with a screw inside while rotating the cylinder, extruding the molten pellets to the tip of the cylinder (the tip portion in the cylinder on the injection section side where a mold is disposed), injecting a melt kneaded material including the liquid crystal polyester resin that has been melted and accumulated at the tip of the cylinder into the mold, and cooling and solidifying the melt kneaded material in the mold.

The cylinder temperature (set temperature) of the injection molding machine is appropriately determined according to the type of the liquid crystal polyester, and may be higher than the flow starting temperature of the liquid crystal polyester used, is preferably set to a temperature 10 to 80°C higher than the flow starting temperature, and is, for example, 300 to 400°C.

The screw rotation speed of the injection molding machine may be appropriately determined, and is, as an example, preferably 50 to 200 rpm.

The screw diameter of the injection molding machine is preferably 30 mm or more, preferably 30 mm or more and 180 mm or less, more preferably 40 mm or more and 90 mm or less, and further preferably 40 mm or more and 65 mm or less.

The pellets of the embodiment exert a particularly excellent effect in shortening the plasticization time in an injection molding machine provided with a screw having such a diameter.

In addition, when the pellets of the embodiment exert a particularly excellent effect on the effect of reducing the value of the torque applied to a motor during the kneading in injection molding in an injection molding machine having a screw diameter of 90 mm or less.

The injection volume of the injection molding machine (maximum volume of an injection material that can be injected in one injection) is preferably 100 cm³ or more, more preferably 120 cm³ or more and 20000 cm³ or less, more preferably 150 cm³ or more and 5000 cm³ or less, further preferably 160 cm³ or more and 3500 cm³ or less, and particularly preferably 170 cm³ or more and 1000 cm³ or less.

The pellets of the embodiment exert a particularly excellent effect in shortening the plasticization time in an injection molding machine having such an injection volume.

In addition, when the pellet of the embodiment exerts a particularly excellent effect on the effect of reducing the value of the torque applied to a motor during the kneading in injection molding in an injection molding machine having an injection volume of 3500 cm³ or less.

The injection volume of the molded article (volume of an injection material molded in one injection) is preferably 50 cm³ or more, more preferably 50 cm³ or more and 20000 cm³ or less, further preferably 80 cm³ or more and 10000 cm³ or less, and particularly preferably 100 cm³ or more and 5000 cm³ or less.

As an example, the maximum clamping force of the injection molding machine is preferably 980 kN or more, more preferably 1300 kN or more and 25000 kN or less, and further preferably 1500 kN or more and 10000 kN or less.

The pellets of the embodiment exert a particularly excellent effect in shortening the plasticization time in an injection molding machine having such a maximum clamping force.

The temperature of the mold is preferably set in the range of room temperature (for example, 23°C) to 180°C from the viewpoint of the cooling rate of the liquid crystal polyester resin and productivity.

The mass per injection molded article produced by the process for producing an injection molded article is preferably 100 to 5000 g, more preferably 500 to 4000 g, and further preferably 1000 to 3500 g.

The pellets of the embodiment exert a particularly excellent effect in shortening the plasticization time in the production of an injection molded article having such a mass.

### Examples

Next, the present invention will be described in more detail with reference to Examples, but the present invention is not limited to the following Examples.

### <Measurement of flow starting temperature of liquid crystal polyester resin>

A temperature at which the melt viscosity showed 4800 Pa·s (48000 poises) when a liquid crystal polyester is extruded from a nozzle at a temperature increase rate of 4°C/min under a load of 9.8 MPa (100 kg/cm²) by a flow tester ("CFT-500D" manufactured by Shimadzu Corporation) and using a capillary type rheometer equipped with a die having an inner diameter of 1 mm and a length of 10 mm was measured, and this temperature was taken as the flow starting temperature.

### <Measurement of melt viscosity of pellets>

The melt viscosity (unit: Pa·s) of the pellets of the liquid crystal polyester resin was measured by the following method by a flow tester ("CFT-500EX" manufactured by Shimadzu Corporation).

A die which nozzle has an inner diameter of 1 mm and a length of 10 mm was attached to the tip of a cylinder, and the cylinder was heated to a measurement temperature. The cylinder was filled with about 2 g of the resin composition composing the pellets and held for 5 minutes to melt the resin composition. A load of 9.8 MPa was applied to the molten resin composition, and the viscosity of the molten resin composition extruded from the nozzle was measured.

### <Measurement of average length (L) of pellets, average diameter (D) of pellets, and pellet volume>

Twenty pellets randomly selected from the obtained elliptical columnar pellets were measured with a microscope ("VHX-1000" manufactured by Keyence Corporation) for the length (L) of the pellets and the diameter (D) as the minor diameter of a cut face. The diameter (D) was set as the length of a short side of a rectangle circumscribing the cut face. In addition, the length (L) was set as the shortest length in the axial direction in a projection image of the pellets obtained from a direction perpendicular to the axial direction connecting the cut faces at both ends of the pellets at the shortest distance. By determining the arithmetic average values of the diameter (D) and the length (L) measured from each pellet, the average length (L) of the pellets and the average diameter (D) of the pellets were determined. The pellet volume was set as the volume of a circular column having a base with the diameter (D) of the cut face as a diameter of the base and having a height being the length (L) of the pellets. The arithmetic average of the pellets volume measured from each pellet was determined to obtain the average volume of the pellets.

### <Production of liquid crystal polyester resin>

### [Production Example 1 (liquid crystal polyester resin A)]

Into a reactor equipped with a stirrer, a torque meter, a nitrogen gas introduction tube, a thermometer, and a reflux condenser were added 994.5 g (7.2 mol) of 4-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride, 0.2 g of 1-methylimidazole as a catalyst was added, and the inside of the reactor was sufficiently purged with nitrogen gas.

After that, the temperature was raised from room temperature to 150°C over 30 minutes while stirring in a nitrogen gas flow, followed by refluxing for 30 minutes while this temperature was held.

Next, 2.4 g of 1-methylimidazole was added. After that, the temperature was raised from 150°C to 320°C over 2 hours and 50 minutes while distilling off the by-produced acetic acid and the unreacted acetic anhydride, and the temperature was held at 320°C for 30 minutes. After holding, the contents were taken out and cooled to room temperature.

The obtained solid was ground by a grinder to a particle diameter of 0.1 to 1 mm, then the temperature was, in a nitrogen atmosphere, raised from room temperature to 250°C over 1 hour, raised from 250°C to 296°C over 5 hours, and held at 296°C for 3 hours to carry out solid phase polymerization. After solid phase polymerization, the resulting solid phase polymerized material was cooled to obtain a powder-shaped liquid crystal polyester resin A. The flow starting temperature of the obtained liquid crystal polyester resin A was 328°C.

### [Production Example 2 (liquid crystal polyester resin B)]

Into a reactor equipped with a stirrer, a torque meter, a nitrogen gas introduction tube, a thermometer, and a reflux condenser were added 994.5 g (7.2 mol) of 4-hydroxybenzoic acid, 446.9 g (2.4 mol) of 4,4'-dihydroxybiphenyl, 358.8 g (2.16 mol) of terephthalic acid, 39.9 g (0.24 mol) of isophthalic acid, and 1347.6 g (13.2 mol) of acetic anhydride. The gas in the reactor was replaced with nitrogen gas, then 0.18 g of 1-methylimidazole was added, and the temperature was raised from room temperature to 150°C over 30 minutes while stirring in a nitrogen gas flow, followed by refluxing at 150°C for 30 minutes.

Next, the temperature was raised from 150°C to 320°C over 2 hours and 50 minutes while distilling off the by-produced acetic acid and the unreacted acetic anhydride, and when an increase in torque was observed, the contents were taken out from the reactor and cooled to room temperature to obtain a prepolymer as a solid.

Next, this prepolymer was ground by a grinder, the resulting ground material was, in a nitrogen atmosphere, raised from room temperature to 250°C over 1 hour, raised from 250°C to 295°C over 5 hours, and held at 295°C for 3 hours to carry out solid phase polymerization.

The resulting solid phase polymerized material was cooled to room temperature to obtain a powder-shaped liquid crystal polyester B. The flow starting temperature of the obtained liquid crystal polyester B was 360°C.

### <Production of pellets>

### • Raw materials

In the following Examples, the following commercially available products were used as an inorganic filler and an external additive.
Inorganic filler: talc, product number: X-50, manufactured by Nippon Talc Co., Ltd., average particle diameter of 22 µm
Inorganic filler: chopped glass fiber, product name: CS03JAPX-1, manufactured by Owens Corning Corporation, fiber bundle length of 3 mm, diameter of 10 µm
Inorganic filler: milled glass fiber, product name: EFH75-01, manufactured by Central Glass Co., Ltd., number average fiber length of 100 µm, diameter of 10 µm
External additive: product name: VESTOSINT 2070, manufactured by Daicel-Degussa Ltd.
PES: polyether sulfone, SUMIKAEXCEL 4101GL30 (manufactured by Sumitomo Chemical Co., Ltd.)

### (Method for measuring number average fiber length of glass fiber)

The number average fiber length of a glass fiber was measured as follows.

First, 5 g of a pellets of a liquid crystal polyester resin composition was heated in a muffle furnace ("FP410" manufactured by Yamato Scientific Co., Ltd.) at 600°C for 4 hours in an air atmosphere to remove the resin and then an ashing residue including a glass fiber was obtained. Zero point three grams of an ashed sample was added into 50 mL of pure water to obtain a mixed liquid. An ultrasonic wave was applied to the obtained mixed liquid for 5 minutes to uniformly disperse the ashed sample in pure water to obtain a specimen liquid.

Next, this specimen liquid in which the glass fiber is dispersed in pure water was placed in a 5 mL sample cup by a pipette and diluted 5-fold with pure water to obtain a sample liquid. Under the following conditions, an image of a glass component in the liquid was captured with a particle shape image analyzer ("Rapid VUE" manufactured by BECKMAN COULTER, Inc.). In the above measurement method, the time point when the number of glass fibers cumulatively counted from the start of the measurement reached 50000 was the time point when the measurement ended.
Number of fibers measured: 50000
Dispersion medium: Water

The obtained image was binarized, the circumscribed rectangle major diameters of the glass fibers in the binarized image were measured, and the average value of 50000 measured values was taken as the number average fiber length of the glass fibers.

### (Method for measuring diameter of glass fiber)

The above ashing residue comprising a glass fiber was observed by an SEM at a magnification of 1000 times, the diameters of 100 glass fibers randomly selected from the SEM image were each measured, and the average value of 100 measured values was adopted as the diameter of the glass fiber.

### (Method for measuring average particle diameter of talc)

The number average particle diameter of talc was measured by laser diffractometry. With a scattering type particle diameter distribution measuring apparatus ("LA-9050V2" manufactured by HORIBA, Ltd.) as a measuring apparatus, the average particle diameter was calculated under the following measurement conditions with the talc dispersed in water.

### [Measurement conditions]

Particle refractive index: 1.59-0.11
Dispersion medium: Water
Dispersion medium refractive index: 1.33

### • Production

The pellets of each example were produced as follows by a production apparatus having the same configuration as that of the production apparatus shown in Figure 3.

A nozzle was installed at the tip of a twin-screw extruder ("PCM-30" manufactured by Ikegai Iron Works Co., Ltd.) such that one strand could be extruded. Subsequently, a belt cooler ("SWA-200-3" manufactured by Isuzu Kakoki Co., Ltd.) having a stainless steel mesh surface coming into contact with the strand for conveying the strand extruded from the nozzle was attached to this twin-screw extruder. A spray nozzle apparatus and an air nozzle apparatus for cooling the strand conveyed by the belt cooler were installed above the convey surface of the belt cooler. Further, a pelletizer ("HSC-200" manufactured by Isuzu Kakoki Co., Ltd.) for pelletizing the strand conveyed by the belt cooler was installed.

### [Pellets of Comparative Examples 1 to 3 and 6 to 8, Examples 1 to 6 and 13 to 15, and Reference Examples 1 and 2]

A mixture of the liquid crystal polyester A (70 parts by mass) and an inorganic filler (30 parts by mass) shown in the tables (Tables 1 and 2 and 5 to 7) was melt kneaded at a cylinder temperature of 350°C while degassing with a vacuum vent provided in the twin-screw extruder, by a water-sealed vacuum pump ("SW-25" manufactured by Shinko Seiki Co., Ltd.), and extruded from the nozzle to obtain a strand of a liquid crystal polyester resin composition.

The obtained strand was solidified on the belt cooler. Next, the solidified strand was cut by a pelletizer and pelletized while being pulled out by pull-out rolls, and then an external additive (0.02 parts by mass) was added and mixed to adhere the external additive to the pellet surface to obtain pellets used in each Example, Comparative Example, or Reference Example (Tables 1 and 2 and 5 to 7).

The shape of each pellet was changed by appropriately adjusting the hole diameter of the nozzle and the rotation speed of the pull-out rolls to adjust the cutting position of the strand.

### [Pellets of Comparative Example 4 and Examples 7 to 11]

The pellets used in the Examples and the Comparative Example were obtained by the same operation as in the above process for producing the pellets of Comparative Example 1 and the like except that in the method, a mixture of the liquid crystal polyester A (60 parts by mass) and the inorganic filler (40 parts by mass) shown in Table 3 was used (Table 3).

### [Pellets of Comparative Example 5 and Example 12]

The pellets used in the Example and the Comparative Example were obtained by the same operation as in the above process for producing the pellets of Comparative Example 1 and the like except that in the method, a mixture of the liquid crystal polyester B (70 parts by mass) and the inorganic filler (30 parts by mass) shown in Table 4 was used to obtain a strand of a liquid crystal polyester resin composition at a cylinder temperature of 360°C (Table 4).

### [Pellets of Reference Examples 3 and 4]

The pellets used in the Reference Examples were obtained by the same operation as in the above process for producing the pellets of Comparative Example 1 and the like except that in the method, a mixture of PES (70 parts by mass) and the inorganic filler (30 parts by mass) shown in Table 8 was used (Table 8).

The same pellets were used in Example 2, Example 13, and Example 14, the same pellets was used in Example 3 and Reference Example 1, and the same pellets were used in Example 4, Example 15, and Reference Example 2.

The pellets of the Examples, the Comparative Examples, and the Reference Examples prepared this time were approximately circular columnar.

### <Production of injection molded article>

### • Production using large injection molding machine (1)

### [Comparative Examples 1 to 5, Examples 1 to 12, and Reference Examples 3 and 4]

Each of the liquid crystal polyester resin pellets shown in Tables 1 to 4 or the polyether sulfone resin pellets shown in Table 8 was fed into an injection molding machine having a cylinder temperature of 360°C, kneaded at a screw rotation speed of 100 rpm, and injected into a mold having a mold temperature of 80°C at an injection speed of 50 mm/s, a hold pressure of 10 MPa, and a back pressure of 2 MPa to prepare an injection molded article (volume of 110 cm³). Then, the motor torque applied during the kneading and the plasticization time of the resin were measured by a measuring instrument attached to the injection molding machine. The average time of the plasticization time in the injection molded articles (n = 20 articles) and the variance of the plasticization time were calculated.

### (Injection molding machine)

Machine name: SE180EV (manufactured by Sumitomo Heavy Industries, Ltd.)
Maximum clamping force: 1800 kN
Screw diameter: 40 mm
Maximum injectable volume: 176 cm³

### • Production using large injection molding machine (2)

### [Comparative Example 6 and Example 13]

Each of the liquid crystal polyester resin pellets shown in Table 5 was injected under the same conditions as in Comparative Example 1 and the like to prepare an injection molded article (volume of 440 cm³). Then, the motor torque applied during the kneading and the plasticization time of the resin were measured by a measuring instrument attached to the injection molding machine. The average time of the plasticization time in the injection molded articles (n = 20 articles) and the variance of the plasticization time were calculated.

### (Injection molding machine)

Machine name: FNX360III (manufactured by Nissei Plastic Industrial Co., Ltd.)
Maximum clamping force: 3540 kN
Screw diameter: 63 mm
Maximum injectable volume: 795 cm³

### • Production using large injection molding machine (3)

### [Comparative Example 7 and Examples 14 and 15]

Each of the liquid crystal polyester resin pellets shown in Table 6 was injected under the same conditions as in Comparative Example 1 and the like to prepare an injection molded article (volume of 1367 cm³). Then, the motor torque applied during the kneading and the plasticization time of the resin were measured by a measuring instrument attached to the injection molding machine. The average time of the plasticization time in the injection molded articles (n = 20 articles) and the variance of the plasticization time were calculated.

### (Injection molding machine)

Machine name: FVX860III (manufactured by Nissei Plastic Industrial Co., Ltd.)
Maximum clamping force: 8410 kN
Screw diameter: 100 mm
Maximum injectable volume: 4000 cm³

### • Production using small injection molding machine

### [Comparative Example 8 and Reference Examples 1 and 2]

Each of the liquid crystal polyester resin pellets shown in Table 7 was injected under the same conditions as in Comparative Example 1 and the like to prepare an injection molded article (volume of 15 cm³). Then, the motor torque applied during the kneading and the plasticization time of the resin were measured by a measuring instrument attached to the injection molding machine. The average time of the plasticization time in the injection molded articles (n = 20 articles) and the variance of the plasticization time were calculated.

### (Injection molding machine)

Machine name: NEX50IV (manufactured by Nissei Plastic Industrial Co., Ltd.)
Maximum clamping force: 490 kN
Screw diameter: 22 mm
Maximum injectable volume: 35 cm³

Results are shown in Tables 1 to 8.

**[Table 1]**

| Screw diameter: 40 mm | Injection volume : 176 cm³ | | | | | | |
|---|---|---|---|---|---|---|---|
| | | Comparative Example 1 | Example 1 | Example 2 | Example 3 | Example 4 | Example 5 |
| Liquid crystal polyester | | Liquid crystal polyester A | | | | | |
| Inorganic filler | | Chopped glass | | | | | |
| | | Reference | | | | | |
| Pellet size | Average diameter of pellets D (mm) | 2.0 | 4.1 | 4.3 | 4.9 | 5.3 | 5.9 |
| | Average length of pellets L (mm) | 3.0 | 6.3 | 6.3 | 5.0 | 7.0 | 9.5 |
| | L/D | 1.5 | 1.5 | 1.5 | 1.0 | 1.3 | 1.6 |
| | Pellet volume (mm³) | 9 | 83 | 91 | 94 | 154 | 260 |
| | Pellet volume/screw diameter | 0.2 | 2.1 | 2.3 | 2.4 | 3.9 | 6.5 |
| Evaluations | Torque (N·m) | 157 | 121 | 107 | 110 | 117 | 133 |
| | Difference from Ref (N·m) | | 36 | 49 | 47 | 40 | 24 |
| | Average plasticization time (s) | 32 | 29 | 28 | 22 | 29 | 23 |
| | Difference from Ref (s) | | 3 | 5 | 10 | 4 | 9 |
| | Variance *σ* | 1.3 | 1.5 | 2.1 | 1.9 | 1.0 | 0.8 |

**[Table 2]]**

| Screw diameter: 40 mm | Injection volume : 176 cm³ | | | |
|---|---|---|---|---|
| | | Comparative Example 2 | Example 6 | Comparative Example 3 |
| Liquid crystal polyester | | Liquid crystal polyester A | | |
| Inorganic filler | | Talc | | |
| | | Reference | | |
| Pellet size | Average diameter of pellets D (mm) | 2.5 | 3.4 | 5.5 |
| | Average length of pellets L (mm) | 2.7 | 3.7 | 3.3 |
| | L/D | 1.1 | 1.1 | 0.6 |
| | Pellet volume (mm³) | 13 | 34 | 78 |
| | Pellet volume/screw diameter | 0.3 | 0.8 | 2.0 |
| Evaluations | Torque (N·m) | 177 | 180 | 182 |
| | Difference from Ref (N·m) | | -2 | -5 |
| | Average plasticization time (s) | 28 | 15 | 29 |
| | Difference from Ref (s) | | 14 | -1 |
| | Variance *σ* | 0.4 | 0.1 | 4.1 |

**[Table 4]**

| Screw diameter: 40 mm | Injection volume : 176 cm³ | | | | | | |
|---|---|---|---|---|---|---|---|
| | | Comparative Example 4 | Example 7 | Example 8 | Example 9 | Example 10 | Example 11 |
| Liquid crystal polyester | | Liquid crystal polyester A | | | | | |
| Inorganic filler | | Milled glass | | | | | |
| | | Reference | | | | | |
| Pellet size | Average diameter of pellets D (mm) | 2.0 | 3.9 | 4.3 | 4.1 | 5.8 | 5.6 |
| | Average length of pellets L (mm) | 3.0 | 5.1 | 7.4 | 8.4 | 8.8 | 10.1 |
| | L/D | 1.5 | 1.3 | 1.7 | 2.0 | 1.5 | 1.8 |
| | Pellet volume (mm³) | 9 | 61 | 107 | 111 | 232 | 249 |
| | Pellet volume/screw diameter | 0.2 | 1.5 | 2.7 | 2.8 | 5.8 | 6.2 |
| Evaluations | Torque (N·m) | 127 | 87 | 104 | 104 | 89 | 69 |
| | Difference from Ref (N·m) | | 40 | 23 | 23 | 37 | 58 |
| | Average plasticization time (s) | 48 | 27 | 23 | 24 | 27 | 41 |
| | Difference from Ref (s) | | 21 | 25 | 24 | 21 | 7 |
| | Variance *σ* | 1.5 | 1.3 | 0.6 | 1.1 | 4.5 | 18.1 |

| Screw diameter: 40 mm | Injection volume : 176 cm³ | | |
|---|---|---|---|
| | | Comparative Example 5 | Example 12 |
| Liquid crystal polyester | | Liquid crystal polyester B | |
| Inorganic filler | | Chopped glass | |
| | | Reference | |
| Pellet size | Average diameter of pellets D (mm) | 2.0 | 4.3 |
| | Average length of pellets L (mm) | 3.0 | 6.3 |
| | L/D | 1.5 | 1.5 |
| | Pellet volume (mm³) | 9 | 91 |
| | Pellet volume/screw diameter | 0.2 | 2.3 |
| Evaluations | Torque (N·m) | 187 | 127 |
| | Difference from Ref (N·m) | | 60 |
| | Average plasticization time (s) | 31 | 27 |
| | Difference from Ref (s) | | 4 |
| | Variance *σ* | 0.5 | 1.1 |

**[Table 6]**

| Screw diameter: 63 mm | Injection volume : 795 cm³ | | |
|---|---|---|---|
| | | Comparative Example 6 | Example 13 |
| Liquid crystal polyester | | Liquid crystal polyester A | |
| Inorganic filler | | Chopped glass | |
| | | Reference | |
| Pellet size | Average diameter of pellets D (mm) | 2.0 | 4.3 |
| | Average length of pellets L (mm) | 3.0 | 6.3 |
| | L/D | 1.5 | 1.5 |
| | Pellet volume (mm³) | 9 | 91 |
| | Pellet volume/screw diameter | 0.2 | 1.5 |
| Evaluations | Torque (N·m) | 1662 | 1488 |
| | Difference from Ref (N·m) | | 173 |
| | Average plasticization time (s) | 123 | 93 |
| | Difference from Ref (s) | | 30 |
| | Variance *σ* | 23 | 12 |

**[Table 7]**

| Screw diameter: 100 mm | Injection volume : 4000 cm³ | | | |
|---|---|---|---|---|
| | | Comparative Example 7 | Example 14 | Example 15 |
| Liquid crystal polyester | | Liquid crystal polyester A | | |
| Inorganic filler | | Chopped glass | | |
| | | Reference | | |
| Pellet size | Average diameter of pellets D (mm) | 2.0 | 4.3 | 5.3 |
| | Average length of pellets L (mm) | 3.0 | 6.3 | 7.0 |
| | L/D | 1.5 | 1.5 | 1.3 |
| | Pellet volume (mm³) | 9 | 91 | 154 |
| | Pellet volume/screw diameter | 0.09 | 0.9 | 1.5 |
| Evaluations | Torque (N·m) | 2768 | 2867 | 2323 |
| | Difference from Ref (N·m) | | -99 | 445 |
| | Average plasticization time (s) | 129 | 120 | 113 |
| | Difference from Ref (s) | | 9 | 16 |
| | Variance *σ* | 9.0 | 3.0 | 5.0 |

**[Table 8]**

| Screw diameter: 22 mm | Injection volume : 35 cm³ | | | |
|---|---|---|---|---|
| | | Comparative Example 8 | Reference Example 1 | Reference Example 2 |
| Liquid crystal polyester | | Liquid crystal polyester A | | |
| Inorganic filler | | Chopped glass | | |
| | | Reference | | |
| Pellet size | Average diameter of pellets D (mm) | 2.0 | 4.9 | 5.3 |
| | Average length of pellets L (mm) | 3.0 | 5.0 | 7.0 |
| | L/D | 1.5 | 1.0 | 1.3 |
| | Pellet volume (mm³) | 9 | 94 | 154 |
| | Pellet volume/screw diameter | 0.4 | 4.3 | 7.0 |
| Evaluations | Torque (N·m) | 3.9 | 3.7 | 3.1 |
| | Difference from Ref (N·m) | | 0.2 | 0.8 |
| | Average plasticization time (s) | 13 | 15 | 36 |
| | Difference from Ref (s) | | -2 | -23 |
| | Variance *σ* | 0.3 | 0.4 | 2.1 |

| Screw diameter: 40 mm | Injection volume : 176 cm³ | | |
|---|---|---|---|
| | | Reference Example 3 | Reference Example 4 |
| | | PES | |
| Inorganic filler | | Chopped glass | |
| | | Reference | |
| Pellet size | Average diameter of pellets D (mm) | 2.0 | 3.5 |
| | Average length of pellets L (mm) | 3.0 | 6.3 |
| | L/D | 1.5 | 1.3 |
| | Pellet volume (mm³) | 9 | 61 |
| | Pellet volume/screw diameter | 0.2 | 1.5 |
| Evaluations | Torque (N. m) | 380 | 150 |
| | Difference from Ref (N·m) | | 230 |
| | Average plasticization time (s) | 14 | 23 |
| | Difference from Ref (s) | | -9 |
| | Variance *σ* | 0.2 | 0.7 |

Each pellet shown in Table 3: 53 Pa·s
Each pellet shown in Table 4: 67 Pa·s

The melt viscosity of each of the pellets used in Reference Example 3 and Reference Example 4 in Table 8 at an injection molding machine cylinder temperature of 360°C was approximately 1300 Pa·s.

In Tables 1 to 8, the pellets of each Comparative Example that did not satisfy the requirements of an average length (L) of 3.2 to 12 mm and an average diameter (D) of 3.2 to 6.0 mm was used as a reference, and for each Example in which the pellet shape was changed, the relation between the pellet shape and the plasticization time was compared in the following combinations.

### (Using small injection molding machine)

- Table 7: Comparative Example 8 and Reference Examples 1 and 2

### (Using large injection molding machine)

- Table 1: Comparative Example 1 and Examples 1 to 5
- Table 2: Comparative Example 2, and Example 6 and Comparative Example 3
- Table 3: Comparative Example 4, and Examples 7 to 11
- Table 4: Comparative Example 5 and Example 12
- Table 5: Comparative Example 6 and Example 13
- Table 6: Comparative Example 7 and Examples 14 and 15
- Table 8: Reference Example 3 and Reference Example 4

In the above production using a small injection molding machine (comparison between Comparative Example 8 and Reference Examples 1 and 2), the effect of shortening the plasticization time in injection molding was not found in each of the Reference Examples in which the pellet shape was changed (Table 7).

In the production using pellets comprising PES instead of a liquid crystal polyester (comparison between Reference Example 3 and Reference Example 4), the effect of shortening the plasticization time in injection molding was not found in the Reference Example in which the pellet shape was changed (Table 8).

On the other hand, in the above production using a large injection molding machine, it was made clear that the pellets comprising the liquid crystal polyester resins of the Examples, respectively, having a pellet shape having an average length (L) of 3.2 to 12 mm and an average diameter (D) in the range of 3.2 to 6.0 mm had a shortened plasticization time in injection molding.

It is considered that their effect of shortening the plasticization time was remarkable because the liquid crystal polyester had a lower viscosity at the time of melt kneading than the other resins such as PES.

However, in Comparative Example 3 in which the value of the average length (L)/the average diameter (D) did not satisfy the requirement of 1 to 2, the effect of shortening the plasticization time was not found.

Therefore, it was made clear that the pellets of each of the Examples having an average length (L) of 3.2 to 12 mm, an average diameter (D) of 3.2 to 6.0 mm, and a value of the average length (L)/the average diameter (D) of the pellets of 1 to 2 is suitable for producing an injection molded article by a large injection molding machine and exhibits an excellent effect in shortening the plasticization time in injection molding.

In Example 11 in which the value of the average length (L) was 10.1 mm, an excellent effect in shortening the plasticization time in injection molding was found, but the variance value was large and a tendency for the plasticization time to vary slightly was found. From the viewpoint of suppressing variation in plasticization time, it is considered that the average length (L) is preferably, for example, 10 mm or less.

Focusing on the types of inorganic fillers blended in the pellets, the effect of shortening the plasticization time in injection molding was well exhibited even when any of the inorganic fillers used in the Examples was blended.

On the other hand, focusing on the value of the torque applied to the motor, pellets comprising a glass fiber such as chopped glass or milled glass exerted an excellent effect of reducing the torque value.

Each configuration in each embodiment, a combination thereof, and the like are examples, and addition, omission, substitution of a configuration, and other modifications are possible unless they depart from the object of the present invention. In addition, the present invention is not limited to each embodiment, but is limited only to the scope of the claims.

### Reference Signs List

- 1: pellets
- 10: strand
- 11: extruder
- 12: belt cooler
- 13: spray nozzle apparatus
- 14: pull-out rolls
- 15: pelletizer
- 16: air nozzle apparatus
- 22: hopper
- 24: cylinder
- 26: screw
- 28: mold
- 100: production apparatus
- 200: injection molding machine
- A: tip direction
- B: backflow
- T: tip portion

## Claims

1. Pellets comprising a liquid crystal polyester resin, wherein
an average length (L) of the pellets is 3.2 to 12 mm, an average diameter (D) of the pellets is 3.2 to 6.0 mm, and
a value of the average length (L)/the average diameter (D) of the pellets is 1 to 2.

2. The pellets comprising a liquid crystal polyester resin according to claim 1, wherein
a shape of the pellets is a columnar body,
an average length (L) between end faces of the columnar bodies is 3.2 to 12 mm, an average diameter (D) of the end faces of the columnar bodies is 3.2 to 6.0 mm, and
a value of the average length (L)/the average diameter (D) is 1 to 2.

3. The pellets according to claim 1 or 2, wherein a volume of the pellets is 25 to 350 mm³.

4. The pellets according to any one of claims 1 to 3, further comprising an inorganic filler.

5. The pellets according to claim 4, wherein a content of the liquid crystal polyester resin is 30% by mass or more and 90% by mass or less, and a content of the inorganic filler is 5% by mass or more and 50% by mass or less, based on a total mass (100% by mass) of the pellets.

6. The pellets according to claim 4 or 5, wherein the inorganic filler is at least one selected from the group consisting of a glass fiber, talc, and a mica.

7. The pellets according to claim 6, wherein the inorganic filler is a glass fiber.

8. The pellets according to claim 6 or 7, wherein a number average fiber length of the glass fiber is 10 to 2000 µm.

9. The pellets according to any one of claims 1 to 8, wherein
the liquid crystal polyester resin comprises
a repeating unit represented by the following formula (1), a repeating unit represented by the following formula (2), and a repeating unit represented by the following formula (3):
(1) -O-Ar¹-CO-
(2) -CO-Ar²-CO-
(3) -X-Ar³-Y-
wherein,
Ar¹ represents a phenylene group, a naphthylene group, or a biphenylylene group,
Ar² and Ar³ each independently represent a phenylene group, a naphthylene group, a biphenylylene group, or a group represented by the following formula (4), and
X and Y each independently represent an oxygen atom or an imino group (-NH-); and
one or more hydrogen atoms in the group represented by Ar¹, Ar², or Ar³ are each independently optionally replaced with a halogen atom, an alkyl group having 1 to 10 carbon atoms, or an aryl group having 6 to 20 carbon atoms,
(4) -Ar⁴-Z-Ar⁵-
wherein,
Ar⁴ and Ar⁵ each independently represent a phenylene group or a naphthylene group, and
Z represents an oxygen atom, a sulfur atom, a carbonyl group, a sulfonyl group, or an alkylidene group having 1 to 10 carbon atoms; and
one or more hydrogen atoms in the group represented by Ar⁴ or Ar⁵ are each independently optionally replaced with a halogen atom, an alkyl group having 1 to 10 carbon atoms, or an aryl group having 6 to 20 carbon atoms.

10. The pellets according to any one of claims 1 to 9, wherein the pellets are used as a molding material in an injection molding machine of which screw has a diameter of 30 mm or more.

11. The pellets according to any one of claims 1 to 10, wherein the pellets are used as a molding material in an injection molding machine which has an injection volume of 100 cm³ or more.

12. The pellets according to any one of claims 1 to 11, wherein the pellets are used as a molding material in an injection molding machine, and a value expressed by a volume (mm³) of the pellet/a screw diameter (mm) of the injection molding machine satisfies a relation of 0.5 or more and 20 or less.

13. The pellets according to any one of claims 1 to 12, wherein a melt viscosity of the pellets at a temperature of 20°C higher than a flow starting temperature of the liquid crystal polyester is 30 Pa·s or more and 100 Pa·s or less.

14. A process for producing the pellets according to any one of claims 1 to 13, comprising melt kneading a raw material comprising the liquid crystal polyester resin to form a strand and then cutting the strand, wherein
the average diameter (D) of the pellets is an average diameter of cut faces formed by the cutting, and
the average length (L) of the pellets is an average length between the cut faces.

15. A process for producing an injection molded article, comprising a step of melting the pellets according to any one of claims 1 to 13 and injection molding the molten pellets by using an injection molding machine to obtain an injection molded article.

16. The process for producing an injection molded article according to claim 15, wherein the pellets are melted and injection molded by an injection molding machine of which screw has a diameter of 30 mm or more.

17. The method for producing an injection molded article according to claim 15 or 16, wherein the pellets are melted and injection molded by an injection molding machine which has an injection volume of 100 cm³ or more.

18. The process for producing an injection molded article according to any one of claims 15 to 17, wherein when the pellets are melted and injection molded by an injection molding machine, a value expressed by a pellet volume (mm³) of the pellets/a screw diameter (mm) of the injection molding machine is 0.4 or more.
